(19) Europäisches Patentamt
European Patent Office
Office européen des brevets

(11) EP 4 730 054 A1

(12) **EUROPEAN PATENT APPLICATION**
published in accordance with Art. 153(4) EPC

(43) Date of publication:
22.04.2026 Bulletin 2026/17

(21) Application number: 24823491.6

(22) Date of filing: 15.06.2024

(51) International Patent Classification (IPC):
*G05B 11/36* (2006.01)    *F15B 11/06* (2006.01)

(52) Cooperative Patent Classification (CPC):
F15B 11/06; G05B 11/36

(86) International application number:
PCT/JP2024/021787

(87) International publication number:
WO 2024/257878 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.06.2023 JP 2023098254
(71) Applicant: **Tokushima University**
**Tokushima-shi, Tokushima 770-8501 (JP)**

(72) Inventors:
• **TAKAIWA, Masahiro**
**Tokushima-shi, Tokushima 770-8501 (JP)**
• **SHIRASE, Sakyo**
**Tokushima-shi, Tokushima 770-8501 (JP)**

(74) Representative: **Plougmann Vingtoft a/s**
**Strandvejen 70**
**2900 Hellerup (DK)**

(54) **CONTROL INPUT GENERATING DEVICE, CONTROL DEVICE, CONTROL INPUT GENERATING METHOD, ACTUATOR, ARITHMETIC CIRCUIT, CONTROL BOARD, CONTROL INPUT GENERATING PROGRAM, AND STORAGE MEDIUM HAVING CONTROL INPUT GENERATING PROGRAM STORED THEREIN**

(57) [Object] To provide a control input generating device that generates a control input for controlling a pneumatic actuator with high accuracy.

[Solution] A control input generating device configured to generate a control input for controlling a pneumatic actuator includes a first control input generation function, a second control input generation function, and an output generation function. The first control input generation function is configured to generate a first control input when an error exists between a target value and a controlled variable. The second control input generation function is configured to, when the controlled variable is varying with time, generate a second control input that increases as the error between the target value and the controlled variable decreases. The output generation function is configured to generate the control input based on the first control input and the second control input. Using the generated control input for controlling the pneumatic actuator can improve the actuator's responsiveness near the target value and reduce overshoot relative to the target value, thereby enhancing the accuracy of operating the pneumatic actuator to reach the target value. This can even prevent overshoot relative to the target value.

FIG.1

## Description

Technical Field

The present invention relates to a control input generating device, a control device, a control input generating method, an actuator, an control computation circuit, a control board, a control input generating program, and a control input generating program. More particularly, the present invention relates to a control input generating device, a control device, a control input generating method, an actuator, an control computation circuit, a control board, a control input generating program, and a storage medium having a control input generating program stored therein that are suitable for controlling pneumatic actuators that employ compressed air as a working fluid, such as pneumatic cylinders.

Background Art

Various types of devices have been adopted as actuators for driving robots and mechatronic equipment, and fluid-powered actuators commonly used include hydraulic cylinders and pneumatic cylinders. For example, when an object to be actuated by such an actuator (i.e., an actuated object) is to be moved to a target position and positioned at that position, or in other words, when the actuated object is to be moved by a predetermined amount, the actuator is controlled based on the difference (error) between the current position of the actuated object and the target position. In other words, the current position of the actuated object is measured by a sensor, and the actuator is controlled such that the error between the measured position and the target position becomes zero.

Among such actuators, pneumatic cylinders offer the advantages of being capable of driving an actuated object at high speed and having a high output-to-weight ratio. Compared to hydraulic cylinders, pneumatic cylinders offer the additional advantages of relatively simple and inexpensive construction of the actuator system, explosion resistance, environmental friendliness, cleanliness, and ease of maintenance.

On the other hand, pneumatic cylinders employ compressible air as the working fluid, which results in stronger nonlinearities in the pressure response system. In addition, low stiffness characteristics of pneumatic cylinders pose a problem in that they are susceptible to the effects of frictional forces in various components of the motion control system (for example, the effects of Coulomb friction and maximum static friction between the cylinder and the head). For these reasons, pneumatic cylinders have a drawback in that their positioning accuracy of stopping an actuated object at a target position is inferior to that of other actuators such as hydraulic cylinders, and it is difficult to achieve micron-level motion control using a pneumatic cylinder with conventional PID-based control methods.

Non-Patent Literature 1 and Non-Patent Literature 2 disclose techniques for improving the positioning accuracy of pneumatic cylinder actuators that have the above-described problems.

Non-Patent Literature 1 and Non-Patent Literature 2 disclose devices configured to move an object over a planar surface by means of a pneumatic cylinder, wherein the drive of the pneumatic cylinder is controlled based on a signal (position signal) obtained by sensing the position of the object, thereby controlling the amount of displacement of the object. Both of the techniques disclosed in Non-Patent Literature 1 and Non-Patent Literature 2 improve positioning accuracy by mitigating the effect of the maximum static friction force acting between the object and the planar surface on cylinder control.

First, in Non-Patent Literature 1, a compensation signal for compensating for a main signal is added to the main signal to form a control signal, where the main signal is used to move an object based on the difference between the current position, obtained from a position signal, and the target position. Specifically, the effect of the maximum static friction force on the control is mitigated by adjusting the compensation signal based on the natural frequency of the feedback control system. Non-Patent Literature 1 discloses that the use of this technique enables the position of an object moved by a pneumatic cylinder to be controlled with an accuracy of approximately 20 nm relative to the target position.

Non-Patent Literature 2 discloses a technique for controlling the drive of a pneumatic cylinder using pulse signals with adjusted pulse widths. Non-Patent Literature 2 discloses that the use of this technique enables the position of an object moved by a pneumatic cylinder to be controlled with an accuracy of approximately 50 nm relative to the target position.

Citation List

Patent Literature

Non-Patent Literature 1: Kei-Ren PAI and Ming-Qiang SHTH, nanoaccuracy Position Control of a Pneumatic Cylinder Driven Table, JSME International Journal, Series C, Vol.46, No. 3,1062- 1067, 2003

Non-Patent Literature 2: Kaiji Sato, Yusuke Sano, Practical and intuitive controller design method for precision positioning of a pneumatic cylinder actuator stage, Precision Engineering 38 703-710, 2014

Disclosure of Invention

Technical Problem

However, the technique disclosed in Non-Patent Literature 1 adjusts the compensation signal based on the natural frequency of the feedback control system and thus cannot achieve high-accuracy position adjustment unless the natural frequency of the feedback control system is known. In general, the natural frequency of a feedback control system that includes an actuator varies depending on factors such as the mass of the object moved by the actuator and age-related degradation of the actuator and other components. Therefore, while the technique disclosed in Non-Patent Literature 1 can be adopted for control in laboratory experimental apparatuses, it is difficult to adopt it for controlling actuators that are actually incorporated into robots, mechatronic equipment, and the like. It is presumed that the technique disclosed in Non-Patent Literature 1 employs air bearings in order to minimize the effects of maximum static friction force and other factors and thereby enable positioning control. This further makes the technique difficult to implement in actual robots, mechatronic equipment, and the like for achieving high-accuracy position adjustment.

The technique disclosed in Non-Patent Literature 2 also cannot achieve high-accuracy position adjustment unless the pulse width for appropriate positioning of the device including the pneumatic cylinder is known. Such a pulse width also varies depending on factors such as the mass of the object moved by the actuator and age-related degradation of the actuator and other components. Therefore, while the technique disclosed in Non-Patent Literature 2 can be adopted for control in laboratory experimental apparatuses, it is also difficult to adopt it for controlling actuators that are actually incorporated into robots, mechatronic equipment, and the like.

In view of the above circumstances, an object of the present invention is to provide a control input generating device, an control computation circuit, and a control board that generate a control input for controlling a pneumatic actuator with high accuracy.

Another object of the present invention is to provide a control device including a control input generating device that generates a control input for controlling a pneumatic actuator with high accuracy, as well as an actuator including such a control device.

A further object of the present invention is to provide a control input generating method for controlling pneumatic actuator drive with high accuracy, a control input generating program for executing such a control input generating method, and a storage medium having the control input generating program stored therein.

Solution to Problem

<Control input generating device>

According to a first aspect of the present invention, a control input generating device configured to generate a control input for controlling a pneumatic actuator includes a first control input generation function, a second control input generation function, and an output generation function. The first control input generation function is configured to generate a first control input when an error exists between a target value and a controlled variable. The second control input generation function is configured to, when the controlled variable is varying with time, generate a second control input that increases as the error between the target value and the controlled variable decreases. The output generation function is configured to generate the control input based on the first control input and the second control input.

According to a second aspect of the present invention, in the first aspect, the first control input generation function may include a function configured to generate a constant steady-state control input as the first control input. Alternatively, the first control input generation function may include a function configured to, when the controlled variable is varying with time, generate a combination of a constant steady-state control input and a variable control input as the first control input, where the variable control input decreases as the error between the target value and the controlled variable decreases.

According to a third aspect of the present invention, in the first aspect, the second control input generation function may be configured to calculate a predicted number of sampling steps N required for the controlled variable to match the target value, based on the error between the target value and the controlled variable and an operating state of the pneumatic actuator. The second control input generation function may be configured to generate the second control input based on the predicted number of sampling steps N such that the second control input increases as the predicted number of sampling steps N decreases.

According to a fourth aspect of the present invention, in the second or third aspect, the first control input generation function may be configured to generate the first control input S1 based on Equation 1. The second control input generation function may be configured to generate the second control input S2 based on Equation 2. The output generation function may be configured to generate the control input based on Equation 3.

$$\text{Equation 1:}$$

$$S1 = K_1 \cdot \text{sgn}(e)$$

$$\text{Equation 2:}$$

$$S2 = K_2/N^{\alpha} \cdot \text{sgn}(v)$$

$$\text{Equation 3:}$$

$$Yc = K_1 \cdot \text{sgn}(e) - K_2/N^{\alpha} \cdot \text{sgn}(v)$$

where

e: error between the target value and the controlled variable,
v: displacement velocity of the pneumatic actuator,
$\alpha$: exponent for adjusting timing at which a breaking effect becomes dominant to suppress operation of the pneumatic actuator,
$K_1$: gain for generating a propulsive force,
$K_2$: gain for generating a braking force, and
N: predicted number of sampling steps.

According to a fifth aspect of the present invention, in the fourth aspect, the first control input generation function may be configured to set the gain $K_1$ for compensating for nonlinear friction in the pneumatic actuator and for generating a propulsive force, based on Equation 2-1. The second control input generation function may be configured to set the gain $K_2$ for generating a braking force to reduce overshoot with respect to the target value, based on Equation 2-2.

$$\text{Equation 2-1:}$$

$$K_1 = Ka \qquad\qquad \text{if } |e| > Eth$$

$$K_1 = Ka/(Eth \cdot |e|) \qquad\qquad \text{if } |e| \leq Eth$$

where

Ka: predefined control input,
Eth: predefined displacement, and
|e|: absolute value of the error e,

$$\text{Equation 2-2:}$$

$$K_2 = Kb \qquad\qquad \text{if } |v| > Vth$$

$$K_2 = 0 \qquad\qquad \text{if } |v| \leq Vth$$

where

Kb: predefined control input,
Vth: predefined displacement velocity, and
|v|: absolute value of velocity v.

According to a sixth aspect of the present invention, in the third aspect, the second control input generation function may include a time-to-arrival calculation function and a predicted step number calculation function. The time-to-arrival calculation function is configured to calculate a time Ta required for the controlled variable to match the target value, based on the error between the target value and the controlled variable. The predicted step number calculation function is configured to calculate a predicted number of sampling steps N = Ta/$\Delta$t, which is a value obtained by dividing the time Ta by a sampling period $\Delta$t used to detect the error between the target value and the controlled variable. The predicted step number calculation function may be configured to, when the predicted number of sampling steps N is smaller than a predetermined threshold, set the predicted number of sampling steps N to the threshold.

According to a seventh aspect of the present invention, in the sixth aspect, the time-to-arrival calculation function may be configured to calculate the time to arrival Ta based on Equation 4.

$$\text{Equation 4:}$$

$$(1/2){\cdot}a{\cdot}Ta^2 + v{\cdot}Ta - e = 0$$

where

a: displacement acceleration of the pneumatic actuator,
v: displacement velocity of the pneumatic actuator,
Ta: time to arrival (difference between arrival time and current time), and
e: error (difference between a target position and a current position).

According to an eighth aspect of the present invention, in the third aspect, the second control input generation function may be configured to calculate the predicted number of sampling steps N based on Equation 5.

$$\text{Equation 5:}$$

$$N = e/\Delta L = e/(v{\cdot}\Delta t)$$

where

e: error between the target value and the controlled variable,
v: displacement velocity of the pneumatic actuator, and
$\Delta$L: amount of change in displacement over one sampling period.

According to a ninth aspect of the present invention, in the first aspect, the target value may be a target position of an object actuated by the pneumatic actuator, a drive velocity of the pneumatic actuator, or a pressure generated by the pneumatic actuator.

<Control device>

According to a tenth aspect of the present invention, a control device configured to control a pneumatic actuator includes the control input generating device according to the first aspect.

According to an eleventh aspect of the present invention, a control device configured to control a pneumatic actuator includes a main control input generation unit and a compensation control input generation unit. The main control input generation unit is configured to generate a main control input for controlling the pneumatic actuator. The compensation control input generation unit is configured to generate a compensation control input for correcting the main control input. The compensation control input generation unit is the control input generating device according to the first aspect.

According to a twelfth aspect of the present invention, in the tenth or eleventh aspect, the control device may include a Type-2 control system with a disturbance observer.

According to a thirteenth aspect of the present invention, in the twelfth aspect, the control device may be configured to perform feedforward control.

<Actuator>

According to a fourteenth aspect of the present invention, an actuator includes an actuating unit and a control unit. The actuating unit is configured to be driven by pneumatic pressure. The control unit is configured to control operation of the actuating unit. The control unit is the control device according to the tenth or eleventh aspect.

<Control computation circuit>

According to a fifteenth aspect of the present invention, an control computation circuit configured to receive a target value and a controlled variable as input signals includes a first control input generation unit, a second control input generation unit, and an output generation unit. The first control input generation unit is configured to generate a first control input when an error exists between the target value and the controlled variable. The second control input generation unit is configured to, when the controlled variable is varying with time, generate a second control input that increases as the error between the target value and the controlled variable decreases. The output generation unit is configured to generate and output a control input based on the first control input and the second control input.

<Control board>

According to a sixteenth aspect of the present invention, a control board includes an input terminal and an output terminal. The input terminal is configured to receive a target value and a controlled variable as input signals. The output terminal is configured to generate and output a control input. The control board includes a main controller, a compensator, and an output generation unit. The main controller is configured to generate a main control input based on signals received from the input terminal. The compensator is configured to generate a compensation control input based on signals received from the input terminal. The output generation unit is implemented as an adder circuit and is configured to generate a control input by combining the main control input and the compensation control input and to supply the control input to the output terminal. The compensator includes a first control input generation function, a second control input generation function, and an output generation function. The first control input generation function is configured to generate a first control input when an error exists between the target value and the controlled variable. The second control input generation function is configured to, when the controlled variable is varying with time, generate a second control input that increases as the error between the target value and the controlled variable decreases. The output generation function is configured to generate and output a control input based on the first control input and the second control input.

According to a seventeenth aspect of the present invention, a control board includes an input terminal and an output terminal. The input terminal is configured to receive a target value and a controlled variable as input signals. The output terminal is configured to generate and output a control input. The control board includes a compensator and an output generation unit. The compensator is configured to generate a compensation control input based on signals received from the input terminal. The output generation unit is implemented as an adder circuit and is configured to generate a control input by combining the compensation control input and a control input supplied from an external source and to supply the generated control input to the output terminal. The compensator includes a first control input generation function, a second control input generation function, and an output generation function. The first control input generation function is configured to generate a first control input when an error exists between the target value and the controlled variable. The second control input generation function is configured to, when the controlled variable is varying with time, generate a second control input that increases as the error between the target value and the controlled variable decreases. The output generation function is configured to generate and output a control input based on the first control input and the second control input.

<Control input generating method>

According to an eighteenth aspect of the present invention, a control input generating method for generating a control input to control a pneumatic actuator includes generating a first control input when an error exists between a target value and a controlled variable. When the controlled variable is varying with time, a second control input is generated. The second control input increases as the error between the target value and the controlled variable decreases. The control input is generated based on the first control input and the second control input.

According to a nineteenth aspect of the present invention, in the eighteenth aspect, the first control input may be a constant steady-state control input. Alternatively, when the controlled variable is varying with time, the first control input may be a combination of a constant steady-state control input and a variable control input that decreases as the error between the target value and the controlled variable decreases.

According to a twentieth aspect of the present invention, in the eighteenth aspect, a predicted number of sampling steps N required for the controlled variable to match the target value may be calculated based on the error between the target value and the controlled variable and an operating state of the pneumatic actuator. The second control input may be generated based on the predicted number of sampling steps N such that the second control input increases as the predicted number of sampling steps N decreases.

According to a twenty-first aspect of the present invention, in the eighteenth or nineteenth aspect, the first control input S1 may be generated based on Equation 1. The second control input S2 may be generated based on Equation 2. The control input may be generated based on Equation 3.

Equation 1:

$$S1 = K_1 \cdot sgn(e)$$

Equation 2:

$$S2 = K_2/N^{\alpha} \cdot sgn(v)$$

Equation 3:

$$Yc = K_1 \cdot sgn(e) - K_2/N^{\alpha} \cdot sgn(v)$$

where

e: error between the target value and the controlled variable,
v: displacement velocity of the pneumatic actuator,
$\alpha$: exponent for adjusting timing at which a breaking effect becomes dominant to suppress operation of the pneumatic actuator,
$K_1$: gain for generating a propulsive force,
$K_2$: gain for generating a braking force, and
N: predicted number of sampling steps.

According to a twenty-second aspect of the present invention, in the twenty-first aspect, the gain $K_1$ for compensating for nonlinear friction in the pneumatic actuator and for generating a propulsive force may be set based on Equation 2-1. The gain $K_2$ for generating a braking force to reduce overshoot with respect to the target value may be generated based on Equation 2-2.

Equation 2-1:

$$K_1 = Ka \qquad \qquad if\ |e| > Eth$$

$$K_1 = Ka/(Eth \cdot |e|) \qquad if\ |e| \leq Eth$$

where

Ka: predefined control input,
Eth: predefined displacement, and
|e|: absolute value of the error e,

Equation 2-2:

$$K_2 = Kb \qquad if\ |v| > Vth$$

$$K_2 = 0 \qquad if\ |v| \leq Vth$$

where

Kb: predefined control input,
Vth: predefined displacement velocity, and
|v|: absolute value of velocity v.

According to a twenty-third aspect of the present invention, in the twentieth aspect, a time Ta required for the controlled variable to match the target value may be calculated based on the error between the target value and the controlled variable. A predicted number of sampling steps N = Ta/$\Delta$t may be calculated, which is a value obtained by dividing the time Ta by a sampling period $\Delta$t used to detect the error between the target value and the controlled variable.

When the predicted number of sampling steps N is smaller than a predetermined threshold, the predicted number of sampling steps N may be set to the threshold.

According to a twenty-fourth aspect of the present invention, in the twenty-third aspect, the time to arrival Ta may be calculated based on Equation 4.

$$\text{Equation 4:}$$

$$(1/2)\cdot a\cdot Ta^2 + v\cdot Ta - e = 0$$

where

a: displacement acceleration of the pneumatic actuator,
v: displacement velocity of the pneumatic actuator,
Ta: time to arrival (difference between arrival time and current time), and
e: error (difference between a target position and a current position).

According to a twenty-fifth aspect of the present invention, in the twentieth aspect, the second control input generation function may be configured to calculate the predicted number of sampling steps N based on Equation 5.

$$\text{Equation 5:}$$

$$N = e/\Delta L = e/(v\cdot \Delta t)$$

where

e: error between the target value and the controlled variable,
v: displacement velocity of the pneumatic actuator, and
$\Delta L$: amount of change in displacement over one sampling period.

According to a twenty-sixth aspect of the present invention, in the eighteenth aspect, the target value may be a target position of an object actuated by the pneumatic actuator, a drive velocity of the pneumatic actuator, or a pressure generated by the pneumatic actuator.

According to a twenty-seventh aspect of the present invention, a control input generating program is configured to cause a control device for controlling operation of a pneumatic actuator to execute the control input generating method according to any one of the eighteenth to twenty-fifth aspects.

According to a twenty-eighth aspect of the present invention, a storage medium has stored therein the control input generating program according to the twenty-seventh aspect.

Advantageous Effects of Invention

<Control input generating device>

According to the first to ninth aspects of the present invention, using the generated control input for controlling a pneumatic actuator can improve the actuator's responsiveness near the target value and reduce overshoot relative to the target value, thereby enhancing the accuracy of operating the pneumatic actuator to reach the target value. This can even prevent overshoot relative to the target value.

<Control device>

According to the tenth and eleventh aspects of the present invention, using this control device as a control device for a pneumatic actuator can improve the actuator's responsiveness near the target value and reduce overshoot relative to the target value, thereby enhancing the accuracy of operating the pneumatic actuator to reach the target value. This can even prevent overshoot relative to the target value.

According to the twelfth aspect of the present invention, the accuracy of operating the pneumatic actuator to reach the target value can be further improved, even in the presence of load fluctuations.

According to the thirteenth aspect of the present invention, the pneumatic actuator can be moved so as to match the target trajectory.

<Actuator>

According to the fourteenth aspect of the present invention, high responsiveness can be achieved near the target value and overshoot relative to the target value can be reduced, enabling the actuator to operate with high accuracy toward the target value.

<Control computation circuit>

According to the fifteenth aspect of the present invention, simply installing this circuit in an existing control device for a pneumatic actuator can improve the actuator's responsiveness near the target value and reduce overshoot relative to the target value, thereby enhancing the accuracy of operating the pneumatic actuator to reach the target value.

<Control board>

According to the sixteenth and seventeenth aspects of the present invention, simply installing this control board in an existing control device for a pneumatic actuator can improve the actuator's responsiveness near the target value and reduce overshoot relative to the target value, thereby enhancing the accuracy of operating the pneumatic actuator to reach the target value.

<Control input generating device>

According to the eighteenth to twenty-sixth aspects of the present invention, using the generated control input for controlling a pneumatic actuator can improve the actuator's responsiveness near the target value and reduce overshoot relative to the target value, thereby enhancing the accuracy of operating the pneumatic actuator to reach the target value. This can even prevent overshoot relative to the target value.

<Control input generating program and the storage medium storing the control input generating program>

According to the twenty-seventh and twenty-eighth aspects of the present invention, executing this program in a control device for controlling a pneumatic actuator, such as by installing the program in the device, can improve the actuator's responsiveness near the target value and reduce overshoot relative to the target value, thereby enhancing the accuracy of operating the pneumatic actuator to reach the target value. This can even prevent overshoot relative to the target value.

Brief Description of Drawings

FIG. 1 is a block diagram of a control system 1 including a control device 10 of the present embodiment.
FIG. 2 illustrates the operation of a pneumatic cylinder 2 controlled by the control device 10 of the present embodiment.
FIG. 3 illustrates an example position control system including the control device 10 of the present embodiment.
FIG. 4 is a table showing the relationship among compensation input Yc, error e, and velocity v.
FIG. 5 illustrates a time variation of the compensation input Yc until an object M comes to rest at the position of a target value Lr.
FIG. 6 illustrates the sequence until the object M comes to rest at the position of the target value Lr.
FIG. 7 is a table showing the relationship between controlled variables and parameters.
FIG. 8 illustrates an example conventional control computation circuit of the present embodiment.
FIG. 9 is a schematic diagram of a conventional positioning control system with an added disturbance observer.
FIG. 10(A) is a photograph of the experimental apparatus, and FIG. 10(B) is a circuit diagram of the experimental apparatus.
FIG. 11 shows the experimental results of Comparative Example 1, where FIG. 11(A) is a graph showing the response during the period from 3 to 6 seconds, and FIG. 11(B) is a graph showing the response during the initial step (3 to 6 seconds) of the experimental results in FIG. 11(A), with the position error scale enlarged.
FIG. 12 shows the experimental results of Example 1, where FIG. 12(A) is a graph showing the response during the period from 3 to 6 seconds, and FIG. 12(B) is a graph showing the response during the initial step (3 to 6 seconds) of the experimental results in FIG. 12(A), with the position error scale enlarged.
FIG. 13 shows the experimental results of Example 1, where FIG. 13(A) is an enlarged view of the range from 10.0 s to 10.2 s in FIG. 12(A), showing the variation in target generated force with respect to the error, and FIG. 13(B) shows the variation in control input with respect to the error during the same time period as in FIG. 13(A).

FIG. 14 shows the experimental results of Example 2.

FIG. 15(A) is a photograph of the experimental apparatus used in Example 3, and FIG. 15(B) shows the experimental results of Example 3.

FIG. 16 is a schematic diagram of a control board B of the present embodiment.

FIG. 17 is a photograph of the experimental apparatus used in Example 4.

FIG. 18(A) is a schematic diagram of the experimental apparatus used in Example 4, and FIG. 18(B) is a graph showing the state of load variation.

FIG. 19 shows the experimental results of Experiment (1) in Example 4.

FIG. 20 shows the experimental results of Experiment (2) in Example 4.

FIG. 21 shows the experimental results of Experiment (3) in Example 4.

FIG. 22 shows an example experiment for setting constants.

FIG. 23 shows the experimental results obtained when a sensor for detecting the table position was changed in Example 1, where FIG. 23(A) is a graph showing the response during the period from 0 to 24 seconds, and FIG. 23(B) is a graph showing the response during the initial step (0 to 4 seconds) of the experimental results in FIG. 23(A), with the position error scale enlarged.

FIG. 24 shows the experimental results obtained when a sensor for detecting the table position was changed in Example 1, where FIG. 24(A) is a graph showing the response during the period from 0 to 24 seconds, and FIG. 24(B) is a graph showing the response during the initial step (0 to 4 seconds) of the experimental results in FIG. 24(A), with the position error scale enlarged.

FIG. 25 shows the experimental results obtained when a sensor for detecting the table position was changed in Example 2.

FIG. 26(A) shows the relationship between gain K1 and error e, and FIG. 26(B) shows the relationship between gain K2 and displacement velocity v.

Description of Embodiments

An embodiment of the present invention will now be described with reference to the drawings.

The control input generating device of the present embodiment is a device configured to generate control inputs used for controlling pneumatic actuators, and is characterized in that it can generate control inputs capable of improving control accuracy.

Also, the control input generating method of the present embodiment is a method for generating control inputs used for controlling pneumatic actuators, and is characterized in that it can generate control inputs capable of improving control accuracy.

<Actuator>

The actuator (control target) controlled by the control input generating device of the present embodiment may be any actuator that is driven by pneumatic pressure, and is not particularly limited. Example actuators that may be controlled by the control input generating device of the present embodiment include pneumatic actuators such as pneumatic cylinders and rotary actuators driven by pneumatic pressure. The term "displacement velocity" as used herein refers to the velocity of movement of the cylinder rod in the case of a pneumatic cylinder, and to the angular velocity of the rotary shaft in the case of a rotary actuator. The term "displacement acceleration" as used herein refers to the acceleration of the cylinder rod in the case of a pneumatic cylinder, and to the angular acceleration of the rotary shaft in the case of a rotary actuator.

<Devices employing the actuator>

There is also no particular limitation on the machines and devices in which the control input generating device of the present embodiment is employed. That is, there is no particular limitation on the machines and devices that include an actuator controlled by the control input generating device of the present embodiment. Example machines and devices employing the control input generating device of the present embodiment include robot arms actuated by the above-described actuators, single-axis transport devices, and multi-axis XY tables.

<Target value>

When an actuator is controlled by the control input generating device of the present embodiment, a target value is set to cause the actuator to perform a predetermined operation, and there is no particular limitation on this target value. For example, when an actuator is used to move an object, the target value may be a target position to which the object is to be moved or at which the object is to be held stationary, or the velocity of the object during movement. Further, the force applied from the actuator to the object when moving it or holding it stationary may also be used as a target value.

Hereinafter, a representative case will be described in which a pneumatic cylinder is used to move an object, and the target value is the position of the object.

The following description illustrates a case in which the actuator is controlled by adding, as a compensation input, the control input generated by the control input generating device of the present embodiment to a typical control device for controlling the actuator. That is, the following description illustrates a case in which the actuator is controlled by a control device that includes a typical control device as a main control input generation unit and the control input generating device of the present embodiment as a compensation control input generation unit. Note that such a control device corresponds to the control device recited in claim 11.

<Control device 10 of the present embodiment>

The control device of the present embodiment will now be described.

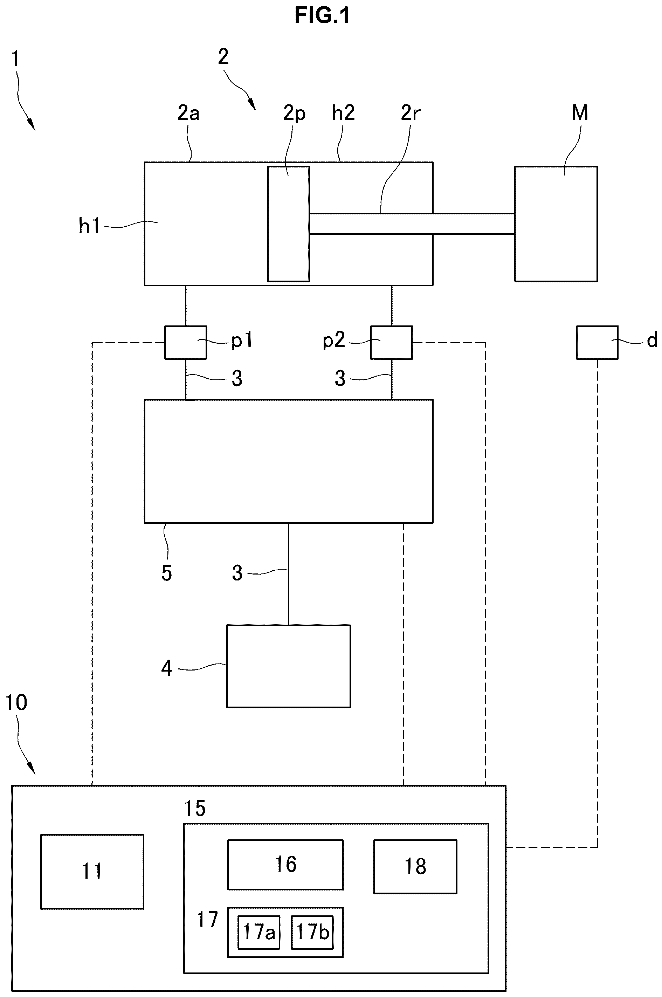

FIG. 1 illustrates a control system 1 in which an object is moved by controlling a pneumatic cylinder by means of the control device 10 of the present embodiment, where reference numeral 2 denotes the pneumatic cylinder whose operation is controlled by the control device 10 of the present embodiment. In the control system 1, an object M is secured to a rod 2r of the pneumatic cylinder 2, so that the movement of the rod 2r (i.e., extension or retraction of the pneumatic cylinder 2) causes the object M to move together with the rod 2r.

As shown in FIG. 1, the pneumatic cylinder 2 is configured such that the interior of a cylinder 2a is airtightly partitioned by a piston 2p into a first chamber h1 and a second chamber h2, and that the first chamber h1 and the second chamber h2 inside the cylinder 2a each communicate with a pneumatic source 4 via piping 3 and a servo valve 5. The servo valve 5 is electrically connected to the control device 10 of the present embodiment (hereinafter simply referred to as the "control device 10").

The control device 10 controls the operation of the pneumatic cylinder 2 by controlling the operation of the servo valve 5. The control device 10 is configured to receive, from input means or the like, a target value, namely, information regarding the position to which the object M is to be moved or the amount of displacement of the object M (or the position at which the object M is to be kept stationary). Signals from pressure sensors p1 and p2, which measure the pressures in the first chamber h1 and the second chamber h2, respectively, of the pneumatic cylinder 2, are supplied to the control device 10. Thus, the control device 10 is capable of detecting the force generated by the pneumatic cylinder 2 and its direction based on the differential pressure between the pressure sensors p1 and p2. Also supplied to the control device 10 is a signal from a position sensor d that measures the position of the object M, namely, the distance of the object M from a predetermined position. Thus, the control device 10 is capable of detecting the current position of the object M actuated by the pneumatic cylinder 2, based on the distance detected by the position sensor d.

The control device 10 is configured to generate a signal (control input) for controlling the operation of the pneumatic cylinder 2, namely, a control input to be supplied to the servo valve 5, based on the target value input from the input means or the like, as well as the current position of the object M and the force generated by the pneumatic cylinder 2 and its direction, as identified from signals from the respective sensors. Specifically, the control device 10 includes a main control input generation unit 11, which is a typical control device for controlling the operation of the servo valve 5, and a compensation control input generation unit 15. The main control input generation unit 11 is configured to generate a main input, which is a control input, based on input signals, by using any known control method such as a linear control theory (e.g., PID control) or a nonlinear control theory (e.g., fuzzy control, a neural network, etc.). On the other hand, the compensation control input generation unit 15 is configured to generate a compensation input Yc for correcting the main input generated by the main control input generation unit 11, the details of which are described later.

With the above configuration, when a target value is input to the control device 10 from the input means or the like, the control device 10 controls the pneumatic cylinder 2 in the following manner.

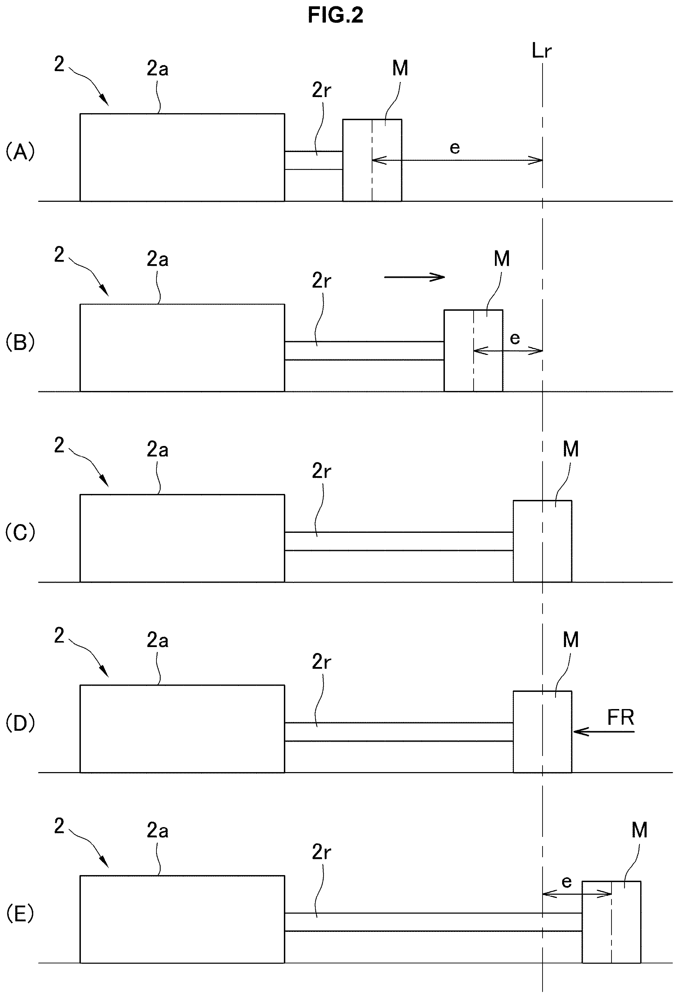

For example, as shown in FIG. 2(A), in the absence of an external force acting on the object M, when a difference (error e) exists between the current position (controlled variable L) of the object M and the target value Lr, the control device 10 recognizes the error e based on a signal from the position sensor d and supplies a signal to the servo valve 5 to operate the pneumatic cylinder 2 in such a manner that the object M moves toward the target value Lr. The servo valve 5 then adjusts the flow rate of the compressed air supplied to the pneumatic cylinder 2, thereby causing the pneumatic cylinder 2 to extend.

As shown in FIG. 2(B), as the object M approaches the target value Lr due to the extension of the pneumatic cylinder 2, the error e decreases. Accordingly, the control device 10 supplies a signal to the servo valve 5 to operate the pneumatic cylinder 2 in such a manner that the force generated by the pneumatic cylinder 2, namely, the force for moving the object M toward the target value Lr, is reduced. The servo valve 5 then adjusts the flow rate of the compressed air supplied to the pneumatic cylinder 2, thereby reducing the force generated by the pneumatic cylinder 2 to slow down the extension speed of the pneumatic cylinder 2.

As shown in FIG. 2(C), when the object M reaches the target value Lr (i.e., when the error e becomes zero), the control device 10 supplies a signal to the servo valve 5 to stop the operation of the pneumatic cylinder 2. The servo valve 5 then stops the supply of compressed air to the pneumatic cylinder 2. This causes the operation of the pneumatic cylinder 2 to stop, allowing the object M to remain stationary at the target value Lr.

On the other hand, when an external force FR is acting on the object M, as shown in FIG. 2(D), stopping the operation of the pneumatic cylinder 2 with the object M positioned at the target value Lr may result in the object M being displaced from the target value Lr due to the external force FR. Even in this case, upon detection of the error e, the control device 10 supplies a signal to the servo valve 5 to operate the pneumatic cylinder 2 in such a manner as to reduce the error e, thereby allowing the object M to remain stationary at the target value Lr.

<Compensation control input generation unit 15>

Here, in the case of the pneumatic cylinder 2, factors such as the compressibility of air and the effect of friction between the object M and other objects greatly affect the control accuracy (i.e., the difference between the stop position of the object M and the target value Lr). Accordingly, to improve the control accuracy, it is a common practice to configure the main control input generation unit 11 as a control system using a disturbance observer. However, even when a disturbance observer is used in the control system, it is still difficult to improve the control accuracy beyond a certain level if the main control input generation unit 11 generates a control input using a conventional control method. This is due to the following reasons.

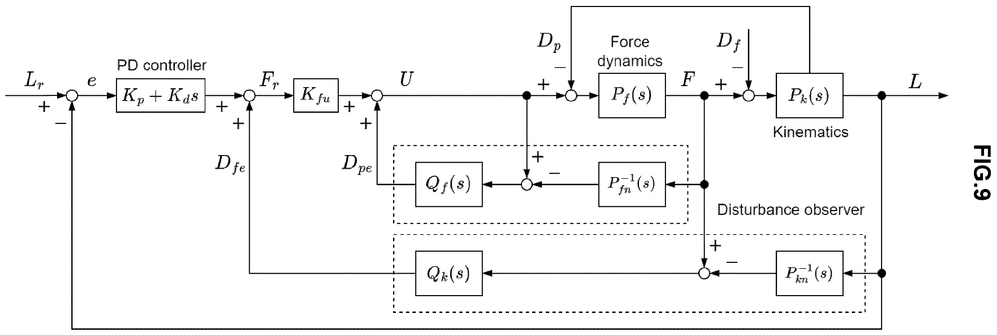

In a positioning control system such as that shown in FIG. 9, assume that a controller (having a function equivalent to that of the main control input generation unit 11) controls the pneumatic cylinder 2 using a conventional control method (e.g., PD control). The positioning control system such as that shown in FIG. 9 includes a force generation control system, and a disturbance observer is applied to each of these systems to compensate for the effects of parameter variations due to load changes and other factors, the nonlinearity in the pressure response system, and the effects of frictional forces and other factors. Note that the disturbance observers shown in FIG. 9 collectively estimate, as disturbances, the effects of deviations from the nominal models of both the force control plant $P_f$ and the motion control plant $P_k$. Accordingly, to ensure the stability of the control system, the estimated disturbances are passed through the respective low-pass filters Q and are then input as estimated disturbances $D_{fe}$ and $D_{pe}$ to the target force Fr and the control input U, respectively.

The parameters shown in FIG. 9 are as follows:

$F_r$: target generated force
U: control input
$P_f$: force control plant
$P_k$: motion control plant
$P_{fn}^{-1}$: inverse nominal model of the force control plant
$P_{kn}^{-1}$: inverse nominal model of the motion control plant
$Q_f$: low-pass filter for the estimated $D_p$
$Q_k$: low-pass filter for the estimated $D_f$
$D_f$: friction or external force
$D_p$: disturbance to the pressure response system
$D_{fe}$: estimated $D_f$
$D_{pe}$: estimated $D_p$

When such a positioning control system is used to control the operation of the pneumatic cylinder 2, the object M moves toward the target position Lr, but does not stop at the target position Lr; instead, it overshoots and exhibits a typical stick-slip phenomenon. This phenomenon occurs because, although the generated force F can follow the target generated force Fr, the target generated force Fr remains unchanged even as the error (in the case of FIG. 2(B), the error e between the target position Lr and the current position of the object M) decreases. This may be due to two facts: first, as the error e becomes extremely small, the braking effect from the derivative action in the PD control diminishes; and second, because the control system is of Type 1 and has an integrating characteristic, its response to variations in the error e is sluggish. One possible approach to reduce such overshoot is to increase the derivative gain $K_d$ so that the system can respond even to very small variations in the error e. However, this approach leads to a significant decrease in stability of the transient response.

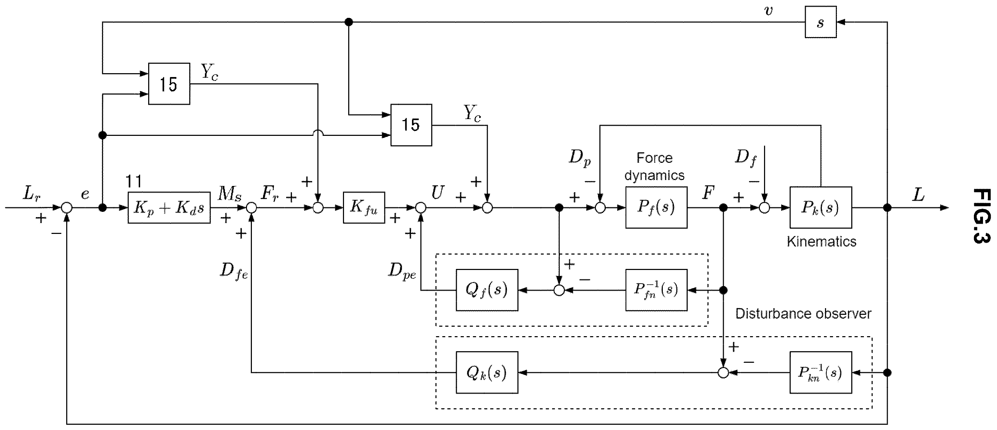

On the other hand, the control device of the present embodiment 10 is configured with a positioning control system, as shown in FIGS. 1 and 3, which includes a compensation control input generation unit 15 that generates a compensation input Yc to correct the main input Ms generated by the main control input generation unit 11. In other words, the control device 10 of the present embodiment is configured such that the compensation input Yc generated by the compensation control input generation unit 15 is added to the main input Ms (which corresponds to Fr in FIG. 3, where the estimated disturbance is added to the main input Ms) to form a control input. Using such a control input including the compensation input Yc reduces the stick-slip phenomenon of the pneumatic cylinder 2, thereby enhancing the positioning accuracy for the object M. For example, when only the control input generated by the main control input generation unit 11 of the control device 10 of the present embodiment 10 (i.e., either the main input Ms or the input obtained by adding the estimated disturbance to the main input Ms) is used, namely, when the control system shown in FIG. 9 is used for positioning control, the positioning accuracy of placing the object M at the target position is at best approximately 10 μm. However, by adding the compensation input Yc generated by the compensation control input generation unit 15 to the main input Ms (or to the input obtained by adding the estimated disturbance to the main input Ms), the control device 10 of the present embodiment is capable of improving the positioning accuracy for placing the object M at the target position to a level comparable to or even higher than the detection accuracy of the position sensor used to measure the position of the object M. For example, when the detection accuracy of the position sensor used to measure the position of the object M is approximately 50 nm, the control device 10 can achieve a positioning accuracy of approximately 50 nm; when the detection accuracy of the position sensor is approximately 1 nm, the control device 10 can achieve a positioning accuracy of approximately 1 nm.

As shown in FIG. 1, the compensation control input generation unit 15 that generates such a compensation input Yc includes a first control input generation function 16, a second control input generation function 17, and an output generation function 18. The compensation control input generation unit 15 is configured to generate the compensation input Yc based on the input of the target value Lr, the controlled variable L, and the piston velocity v.

More specifically, the compensation control input generation unit 15 is configured to generate the compensation input Yc using a first control input S1 generated by the first control input generation function 16 and a second control input S2 generated by the second control input generation function 17 (i.e., Yc = S1 - S2). The first control input S1 serves to promote the movement of the pneumatic cylinder 2 toward the target position Lr (causing the pneumatic cylinder 2 to perform a so-called acceleration function). The second control input S2 serves to suppress the movement of the pneumatic cylinder 2 toward the target position Lr (causing the pneumatic cylinder 2 to perform a so-called braking function). The compensation input Yc, derived from appropriately generated first and second control inputs S1 and S2, can improve the positioning control accuracy for placing the object M at the target position to a level comparable to the detection accuracy of the position sensor.

<First control input generation function 16>

The first control input generation function 16 is configured to generate the first control input S1 when an error e exists between the target value Lr and the controlled variable L. Specifically, the first control input generation function 16 is configured to generate a constant steady-state control input as the first control input S1. For example, the first control input generation function 16 generates the first control input S1 based on Equation 1 below.

$$\text{Equation 1:}$$

$$S1 = K_1 \cdot \text{sgn}(e)$$

where

e: error between the target value Lr and the controlled variable L, and
$K_1$: gain for compensating for the nonlinear friction of the pneumatic cylinder 2 and for generating a propulsive force
Note that sgn(e) is a function that returns 1 when e > 0, -1 when e < 0, and 0 when e = 0.

<Second control input generation function 17>

The second control input generation function 17 is configured to, when the controlled variable L is varying with time, generate the second control input S2 that increases as the error e between the target value Lr and the controlled variable L decreases. Specifically, the second control input generation function 17 includes a predicted step number calculation function 17b to calculate the predicted number of sampling steps N required for the controlled variable L to match the target value Lr, based on the error e between the target value Lr and the controlled variable L and the piston velocity v. Furthermore, the second control input generation function 17 is configured to generate, based on the predicted number of sampling steps N calculated by the predicted step number calculation function 17b, the second control input S2 such that the second control input S2 increases as the predicted number of sampling steps N decreases.

For example, the second control input generation function 17 can generate the second control input S2 based on Equation 2 below. Note that the displacement velocity v of the pneumatic cylinder 2 is the same as the piston velocity v shown in FIG. 3.

Equation 2:

$$S2 = K_2/N^\alpha \cdot \text{sgn}(v)$$

where

e: error between the target value and the controlled variable,
v: piston displacement velocity of the pneumatic cylinder 2,
α: exponent for adjusting the timing at which the breaking effect becomes dominant to suppress the operation of the pneumatic cylinder 2, and
$K_2$: gain for generating a braking force to reduce overshoot with respect to the target value Lr.

Note that sgn(v) is a function that returns 1 when v > 0, -1 when v < 0, and 0 when v = 0.

<Third control input generation function 18>

The third control input generation function 18 is configured to generate the compensation input Yc based on the first control input S1 generated by the first control input generation function 16 and the second control input S2 generated by the second control input generation function 17. Note that the third control input generation function 18 corresponds to the output generation function recited in claim 1.
For example, the compensation control input generation unit 15 can generate the compensation input Yc based on Equation 3 below.

Equation 3:

$$Yc = K_1 \cdot \text{sgn}(e) - K_2/N^\alpha \cdot \text{sgn}(v)$$

where

e: error between the target value Lr and the controlled variable L,
v: displacement velocity of the pneumatic cylinder 2,
α: exponent for adjusting the timing at which the breaking effect becomes dominant to suppress the operation of the pneumatic cylinder 2,
$K_1$: gain for compensating for the nonlinear friction of the pneumatic cylinder 2 and for generating a propulsive force, and
$K_2$: gain for generating a braking force to reduce overshoot with respect to the target value Lr.

As described above, the third control input generation function 18 generates the compensation input Yc by combining the first control input S1 generated by the first control input generation function 16 and the second control input S2 generated by the second control input generation function 17. This provides the following advantages.
First, when the first control input generation function 16 generates the first control input S1 according to Equation 1 above, the resulting control will be of the on-off type in which the first control input S1 changes in three steps. Accordingly, when an error e exists between the target value Lr and the controlled variable L, the compensation input Yc includes a steady-state value having the same sign as the error e as the first control input S1. When the error e is zero, the first control input S1 becomes zero. In this manner, the compensation input Yc including a constant first control input S1, which is independent of the magnitude of the error e, is added to the main input Ms to form the control input. This can improve the responsiveness during transient states. For example, near the target position Lr, the friction acting on the piston of the pneumatic cylinder 2 or on the object M can be compensated, thereby improving the responsiveness near the target position Lr.
When the second control input generation function 17 generates the second control input S2 according to Equation 2 above, and when a velocity is present, that is, when the piston of the pneumatic cylinder 2 is in motion, the compensation input Yc is given by subtracting from the first control input S1 the second control input S2, which is inversely proportional to the predicted number of sampling steps N. When the velocity is zero, the second control input S2 becomes zero, so that the compensation input Yc equals the first control input S1. In this manner, the effect of suppressing the operation of the pneumatic cylinder 2 near the target value Lr (i.e., applying a braking effect) is enhanced, which helps reduce the occurrence of stick-slip and enables high-accuracy positioning at the target value Lr.

As described above, the control device 10 of the present embodiment adds the compensation input Yc, generated by the compensation control input generation unit 15, to the main input Ms generated by the main control input generation unit 11 to form the control input. This improves the responsiveness of the pneumatic cylinder 2 during transient states and also enables high-accuracy positioning at the target value Lr.

<State of the compensation input Yc>

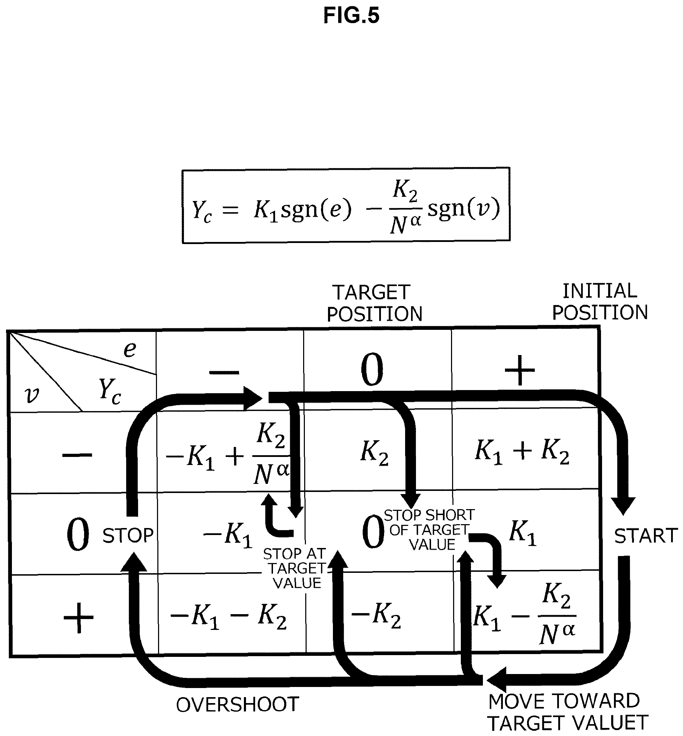

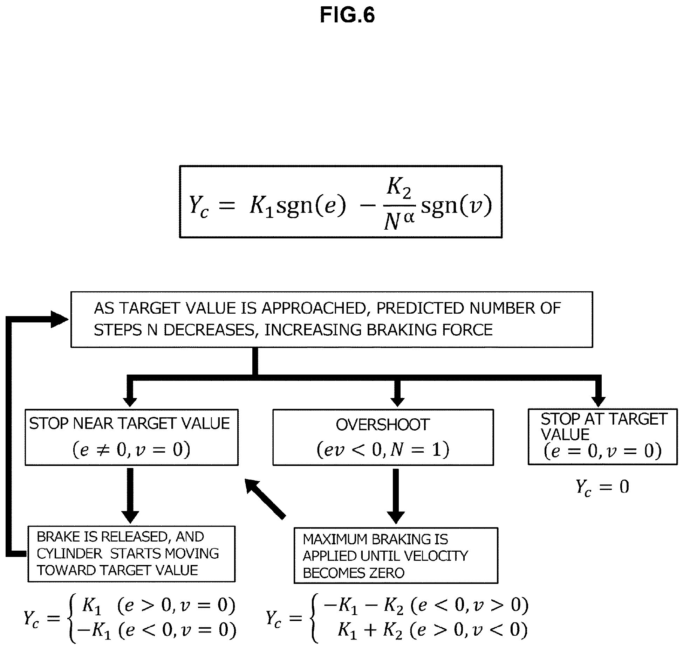

The sequence until the object M comes to rest at the target position Lr (i.e., until the control settles) will now be described with reference to FIGS. 5 and 6.

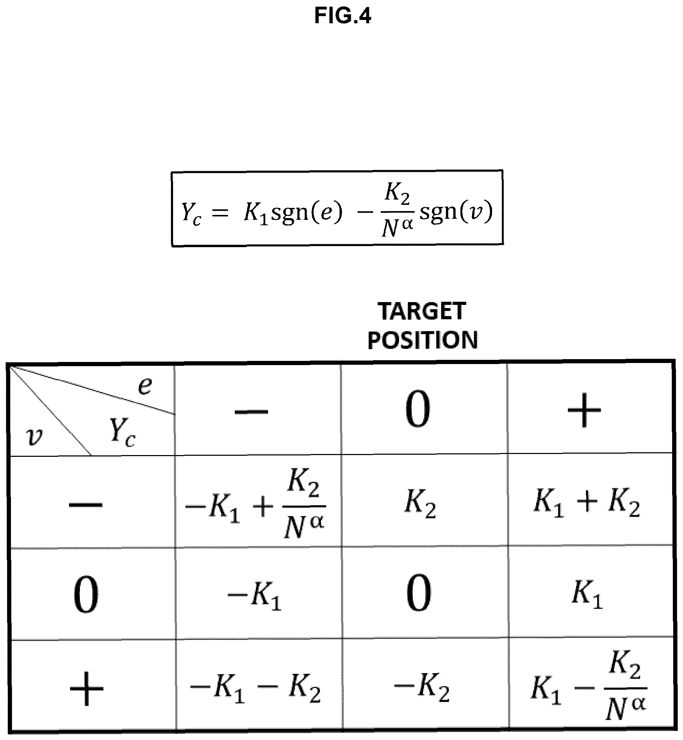

The compensation input Yc takes the values shown in the table of FIG. 4, depending on the sign of the error e between the target value Lr and the controlled variable L, and the sign of the displacement velocity of the pneumatic cylinder 2 (piston velocity v). Accordingly, when the pneumatic cylinder 2 starts operating from a non-operating state (for example, the state where e > 0 and v = 0), the compensation input Yc becomes $K_1$, causing the pneumatic cylinder 2 to move toward the target value Lr (i.e., move forward). As the pneumatic cylinder 2 moves toward the target position Lr and approaches it, the error e becomes smaller. Then, the pneumatic cylinder 2 gradually decreases its velocity under the influence of the second control input S2 ($K_2/N^\alpha$), eventually coming to a stop (v = 0).

If the controlled variable L of the pneumatic cylinder 2 matches the target value Lr (e = 0) at this point, the pneumatic cylinder 2 remains stationary. On the other hand, if an error e still exists even after the operation of the pneumatic cylinder 2 has stopped (i.e., if it has stopped short of the target value Lr, resulting in e > 0), the pneumatic cylinder 2 starts operating under the influence of the first control input S1 ($K_1$) and moves toward the target value Lr.

As the pneumatic cylinder 2 moves toward the target value Lr, its operation comes to a stop (v = 0) under the influence of the second control input S2 ($K_2/N^\alpha$). If the pneumatic cylinder 2 stops short of the target value Lr (e > 0) at this point, it moves forward and stops repeatedly until the controlled variable L of the pneumatic cylinder 2 matches the target value Lr.

On the other hand, if the controlled variable L of the pneumatic cylinder 2 exceeds the target value Lr (e < 0), both the first control input S1 ($K_1$) and the second control input S2 ($K_2/N^\alpha$) function as braking inputs, quickly bringing the operation of the pneumatic cylinder 2 to a stop (v = 0). In this case, since an error e exists (e < 0), the pneumatic cylinder 2 starts operating under the influence of the first control input S1 ($K_1$) and moves toward the target value Lr. In other words, the pneumatic cylinder 2 starts moving toward the target value Lr in the direction opposite to that of the initial movement (i.e., moving in reverse).

Once the pneumatic cylinder 2 starts operating, it gradually decreases its velocity under the influence of the second control input S2 ($K_2/N^\alpha$), eventually coming to a stop (v = 0). If the controlled variable L of the pneumatic cylinder 2 matches the target value Lr (e = 0) at this point, the pneumatic cylinder 2 remains stationary. On the other hand, if the pneumatic cylinder 2 stops short of the target value Lr (e < 0), it moves in reverse and stops repeatedly until the controlled variable L of the pneumatic cylinder 2 matches the target value Lr.

In the reverse movement as well, the controlled variable L of the pneumatic cylinder 2 may become smaller than the target value Lr (e > 0). In this case, as with the overshoot situation, both the first control input S1 ($K_1$) and the second control input S2 ($K_2/N^\alpha$) function as braking inputs, quickly bringing the operation of the pneumatic cylinder 2 to a stop (v = 0). In this case, since an error e exists (e > 0), the pneumatic cylinder 2 starts operating under the influence of the first control input S1 ($K_1$), and moves forward and stops repeatedly.

As described above, the compensation input Yc causes the pneumatic cylinder 2 to move toward the target value Lr and stop repeatedly, making it possible to align the controlled variable L with the target value Lr. Furthermore, since the first control input S1 ($K_1$), which causes the pneumatic cylinder 2 to resume movement after stopping, is constant, it can quickly resume movement even when the error e is small. In addition, the second control input S2 ($K_2/N^\alpha$) assumes a higher value near the target value Lr, which helps reduce the occurrence of stick-slip and enables high-accuracy positioning at the target value Lr.

<Note on the first control input generation function 16>

The first control input generation function 16 has been described as generating a constant steady-state control input as the first control input S1. However, the first control input generation function 16 may also be configured to generate the first control input S1 as the sum of a constant steady-state control input and a variable control input that decreases with a decrease in the error e between the target value Lr and the controlled variable L. For example, during the early stage of a transient response where the error is relatively large, adding the variable control input to the first control input S1 can provide benefits such as improved responsiveness.

<Note on the gain $K_1$ for the first control input S1 and the gain $K_2$ for the second control input S2>

The gain $K_1$ for the first control input S1 and the gain $K_2$ for the second control input S2 may be set to the same value regardless of the movement direction of the pneumatic cylinder 2. However, they may also assume different values depending on the movement direction. When the pneumatic cylinder 2 is a single-rod cylinder, the pressure-receiving area of the piston differs between the two sides thereof due to the presence of the rod. Accordingly, the single-rod cylinder tends to generate greater force in the pushing motion of the piston (i.e., the motion away from the rod side) than in the pulling motion of the piston (i.e., the motion toward the rod side). In other words, it is generally easier to move the piston in the pushing motion than in the pulling motion. Thus, when the pneumatic cylinder 2 is a single-rod cylinder, the gain $K_1$ for the first control input S1 and the gain $K_2$ for the second control input S2 may be varied as follows depending on the movement direction of the piston.

$$K_1 = K_1a \ (e > 0)$$

$$K_1 = K_1b \ (e < 0)$$

$$K_2 = K_2a \ (v > 0)$$

$$K_2 = K_2b \ (v < 0)$$

where

$$K_1a < K_1b \text{ and } K_2a < K_2b.$$

The pneumatic cylinder 2 is also affected by a unidirectional force acting on it. As a result, even when the same amount of displacement or velocity is to be achieved, the required force, that is, the differential pressure to be generated between the first chamber h1 and the second chamber h2 of the pneumatic cylinder 2, will vary depending on the direction of piston movement. Accordingly, when an external force acts in the pushing direction of the pneumatic cylinder 2, the gain $K_1$ for the first control input S1 and the gain $K_2$ for the second control input S2 may also be set in the same manner as described above. On the other hand, when an external force acts in the pulling direction of the pneumatic cylinder 2, the gain $K_1$ for the first control input S1 and the gain $K_2$ for the second control input S2 may be set such that $K_1a > K_1b$ and $K_2a > K_2b$.

The gain $K_1$ for the first control input S1 and the gain $K_2$ for the second control input S2 may be fixed values (constants). However, they may also be varied in response to the actual error or displacement velocity. In this manner, setting the gain $K_1$ for the first control input S1 as shown in Equation 2-1 below can generate a predetermined input that promotes movement toward the target value until the error e reaches the required positioning accuracy (required error). On the other hand, once the absolute value |e| of the error e falls below the required error, a control input that dampens the movement can be generated instead, which further improves responsiveness near the target value.

Also, the gain $K_2$ for the second control input S2 can be set as shown in Equation 2-2, such that the gain $K_2$ becomes zero when the displacement velocity falls below the displacement velocity that is required (required displacement velocity). This prevents instability in the second control input S2 in extremely low-speed regions, where the effect of noise tends to be significant.

Equation 2-1:

$$K_1 = Ka \qquad \qquad \text{if } |e| > Eth$$

$$K_1 = Ka/(Eth \cdot |e|) \text{if } |e| \leq Eth$$

where

Ka: minimum control input required to initiate displacement,
Eth: required positioning accuracy (required error) (error threshold), and
|e|: absolute value of the error e.

Equation 2-2:

$$K_2 = Kb \qquad \text{if } |v| > Vth$$

$$K_2 = 0 \qquad \text{if } |v| \leq Vth$$

where

Kb: minimum control input required to initiate displacement,
Vth: threshold displacement velocity, considering the effect of observation noise, and
|v|: absolute value of the velocity v.

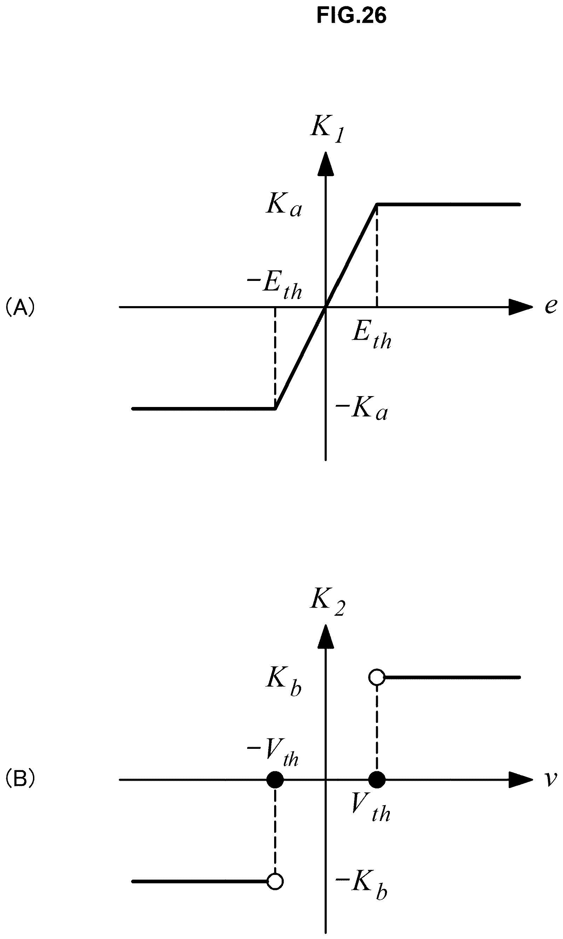

Setting the gain $K_1$ for the first control input S1 as shown in Equation 2-1 results in a relationship among the gain $K_1$, the first control input S1, and the error e as illustrated in FIG. 26(A). Also, setting the gain $K_2$ for the second control input S2 as shown in Equation 2-2 results in a relationship among the gain $K_2$, the second control input S2, and the displacement velocity v as illustrated in FIG. 26(B).

According to the present invention, the compensation input Yc is generated using the first control input S1 and the second control input S2 in the manner described above, based on the following technical concept.

First, when the gain $K_1$ for the first control input S1 and the gain $K_2$ for the second control input S2 are set using Equations 2-1 and 2-2 described above and the compensation input Yc is generated based on Equation 3, the gain $K_1$ for the first control input S1, which constitutes the first term, is designed to exceed the maximum static friction force. Thus, the first control input S1 is designed to serve as a control input that keeps the control target moving, without stopping its displacement under any conditions or environment, until the error reaches a predetermined threshold (i.e., until the absolute value of the error falls below the predetermined threshold). That is, the first control input S1 is designed to serve as a control input that drives the absolute value of the error toward the predetermined threshold. Even when the control target is about to stop its displacement as the absolute value of the error of the control target is being driven toward the predetermined threshold, setting the second control input S2 in the second term to a near-zero value allows the movement to continue until the absolute value of the error reaches the predetermined threshold. That is, when the absolute value of the error approaches the predetermined threshold and the control target is about to stop, the predicted number of sampling steps N increases (i.e., the amount of change in displacement ΔL over one sampling period becomes small). As a result, the second control input S2, which constitutes the second term of the compensation input Yc and serves as a braking input to the control target, becomes close to zero. This results in the compensation input Yc effectively consisting only of the first term, enabling the control target to overcome the frictional force and continue its movement.

On the other hand, upon the error falling within the predetermined threshold (i.e., the absolute value of the error falling below the predetermined threshold) and the target value being nearly reached (e = 0), the second control input S2 is designed to generate a braking force to stop the movement of the control target and thereby halt its displacement if the velocity (absolute value of the velocity) at that moment exceeds a predetermined threshold.

With the first control input S1 and the second control input S2 designed as described above, the first control input S1, which constitutes the first term, ensures that if the error, having once fallen within the predetermined threshold (i.e., its absolute value became smaller than the threshold), falls outside the threshold (i.e., its absolute value becomes larger than the threshold), it can quickly be brought back within the threshold. Since the main controller generally includes an integrator, it outputs a signal obtained by integrating the error as long as the error is not zero, thereby attempting to drive it to zero. This may cause the error to deviate from the predetermined threshold under normal conditions; however, the effect of the first control input S1 described above, which constitutes the first term, quickly brings the error back within the threshold.

Furthermore, with the first control input S1 and the second control input S2 designed as described above, even when an external force acts on the control target and causes the error to fall outside the predetermined threshold (i.e., causes the absolute value of the error to become larger than the threshold) while the velocity (absolute value of the velocity) of the control target is above its predetermined threshold, the second control input S2, which constitutes the second term, ensures that a strong braking force is applied to the control target, thereby preventing the error from deviating significantly from the threshold. As a result, the effect of the first control input S1, which constitutes the first term, works to quickly bring the error back within the threshold.

<Predicted step number calculation function 17b >

There is no particular limitation on the method by which the predicted number of sampling steps N is calculated by the predicted step number calculation function 17b of the second control input generation function 17. For example, the predicted number of sampling steps N may be defined as the time period required for the controlled variable L to match the target value Lr, based on the sampling period $\Delta t$ used to detect the error e between the target value Lr and the controlled variable L (e.g., the period at which the position sensor detects the controlled variable L). That is, as shown in FIG. 1, the second control input generation function 17 may be provided with a time-to-arrival calculation function 17a to calculate a time to arrival (time to arrival Ta) from the current position to the target position, and the predicted number of sampling steps N may then be obtained by dividing the time to arrival Ta, calculated by the time-to-arrival calculation function 17a, by the sampling period $\Delta t$ (i.e., N = Ta/$\Delta t$). Calculating the predicted number of sampling steps N by the predicted step number calculation function 17b in this manner also offers the advantage of simplifying the calculation of the predicted number of sampling steps N. Note that N = Ta/$\Delta t$ may alternatively be calculated using Equation 5 below. Note that v $\cdot\Delta t$ is equal to the amount of displacement per sampling period, $\Delta L$ (that is, the amount of change in displacement over one sampling period).

$$\text{Equation 5:}$$

$$N(e, v) = e/\Delta L = e/(v\cdot\Delta t)$$

where

    e: error between the target value Lr and the controlled variable L,
    v: displacement velocity of the pneumatic cylinder 2, and
    $\Delta L$: amount of change in displacement over one sampling period.

Alternatively, the value of N in Equation 5 may be determined using Equation 5-1 below.

$$\text{Equation 5-1:}$$

$$N(Lr, L) = (Lr(k) - L(k))/(L(k) - L(k\text{-}1))$$

where

    Lr(k): target position,
    L(k): current position, and
    L(k - 1): current position in the previous step.

The predicted step number calculation function 17b may also be configured to set the predicted number of sampling steps N to a predetermined threshold X when the predicted number of sampling steps N is smaller than the threshold X. For example, when the threshold X is set to 1, the predicted step number calculation function 17b may be configured to set the predicted number of sampling steps N to 1 upon the predicted number of sampling steps N falling below 1.

The reason for providing such a function is as follows. For example, when the second control input S2 has the gain $(K_2/N^\alpha)$ as described above, an excessively high piston velocity v relative to the error e between the target value Lr and the controlled variable L may lead to an extremely large value of the second control input S2, which may in turn diverge toward infinity and potentially cause the control system to run out of control. Therefore, in order to limit the value of the second control input S2 and prevent the control system from running out of control, it is desirable to set the minimum value of the predicted number of sampling steps N to the threshold X.

While in the above example, the second control input S2 is generated using Equation 2, the method by which the predicted step number calculation function 17b generates the second control input S2, that is, the equation used to generate the second control input S2 (the second control input generation equation), is not limited to Equation 2. Any equation that generates the second control input S2 in such a manner that it increases with a decrease in the predicted number of sampling steps N may be used. Put differently, any equation for generating the second control input S2 may be used, as long as the resulting compensation input Yc, which is generated based on the first control input S1 and the second control input S2, enables the actuator's operation to settle appropriately. That is, any second control input generation equation may be adopted, as long as it generates a second control input S2 that achieves the desired settling characteristics of the actuator's operation.

<Method for calculating the time to arrival Ta>

There is no particular limitation on the method used to calculate the time period required for the controlled variable L to match the target value Lr in the second control input generation function 17, that is, the method by which the time to arrival Ta is calculated by the time-to-arrival calculation function 17a. For example, if the values of a and v are known, the time to arrival Ta can be calculated based on Equation 4 below, using, e.g., the Newton-Raphson method.

$$\text{Equation } 4\text{:}$$

$$(1/2)\cdot a\cdot Ta^2 + v\cdot Ta - e = 0$$

where

    a: displacement acceleration of the pneumatic cylinder 2,
    v: displacement velocity of the pneumatic cylinder 2
    Ta: time to arrival (difference between the arrival time and the current time), and
    e: error (difference between the target position and the current position).

<Note on the third control input generation function 18>

While in the above example, the third control input generation function 18 generates the compensation input Yc based on Equation 3, there is also no particular limitation on the equation by which the third control input generation function 18 generates the compensation input Yc (i.e., the compensation input generation equation). Any compensation input generation equation can be adopted, as long as it generates, based on the first control input S1 and the second control input S2, a compensation input Yc that enables the actuator's operation to settle appropriately. That is, any compensation input generation equation may be adopted, as long as it generates, based on the first control input S1 and the second control input S2, a compensation input Yc that achieves the desired settling characteristics of the actuator's operation.

<Using the control input generation device of the present embodiment as a control device>

While in the above example, the control input generating device of the present embodiment is included as a compensation input generating device in a control device, the operation of the pneumatic cylinder 2 may be controlled using only the control input generating device of the present embodiment. That is, the control input generating device of the present embodiment can be used as a control device for controlling the operation of the pneumatic cylinder 2. In this case, the compensation input generated by the control input generating device of the present embodiment is provided as a control input for controlling the operation of the pneumatic cylinder 2.

<Control computation circuit>

The control input generating device of the present embodiment may be provided in the form of an control computation circuit. That is, an control computation circuit may be manufactured that includes an input terminal configured to receive a target value and a current value as input signals, and an output terminal configured to output a signal equivalent to the control input generated by the control input generating device of the present embodiment described above. The control input generating device of the present embodiment may then be provided in the form of this control computation circuit (i.e., the control computation circuit of the present embodiment).

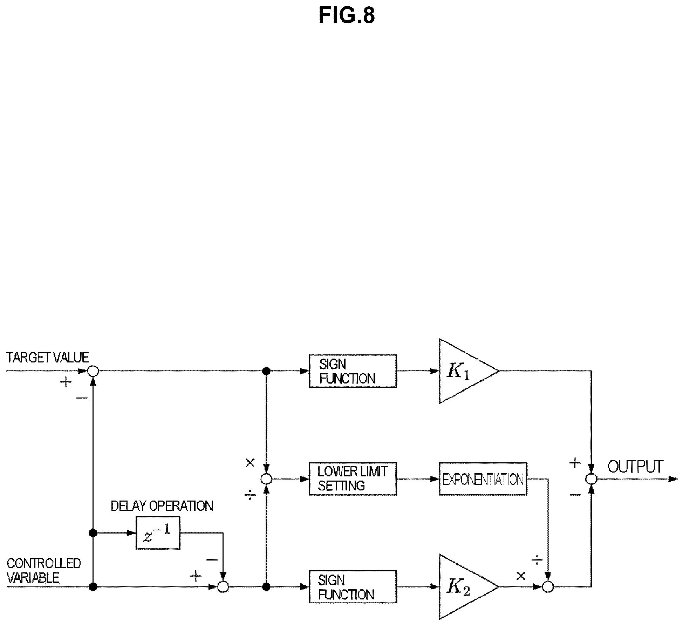

That is, a circuit may be formed that includes: a first control input generation unit configured to generate, in response to receiving a target value and a controlled variable as input signals, a first control input when an error exists between the target value and the controlled variable; a second control input generation unit configured to generate, when the controlled variable is varying with time, a second control input that increases as the error between the target value and the controlled variable decreases; and an output generation unit configured to generate and output a control input based on the first control input and the second control input. This circuit can then be provided as the control computation circuit of the present embodiment. For example, the control computation circuit of the present embodiment having the aforementioned functions can be implemented by a circuit configured as shown in FIG. 8. Accordingly, such a circuit can be provided as the control computation circuit of the present embodiment.

When the control input generating device of the present embodiment is provided in the form of an control computation circuit, the existing control device may remain unchanged, and the control computation circuit may be incorporated into the existing control device in such a way that the control input generated by the control input generating device of the present embodiment serves as a compensation input. This enables the existing control device for a pre-installed actuator to perform functions equivalent to those of the control device of the present embodiment.

As described above, the control computation circuit may be configured to supply the compensation input to the existing control device. Alternatively, the control input from the existing control device may also be input to the control computation circuit, and the control computation circuit may be configured to output a control input obtained by combining the control input from the existing control device and the compensation input (i.e., the control input generated by the control input generating device of the present embodiment).

<Control board>

The control input generating device of the present embodiment may also be provided in the form of a control board. That is, a control board may be manufactured that includes an input terminal configured to receive a target value and a current value as input signals, and an output terminal configured to output a signal equivalent to the control input generated by the control input generating device of the present embodiment described above. The control input generating device of the present embodiment may then be provided in the form of this control board.

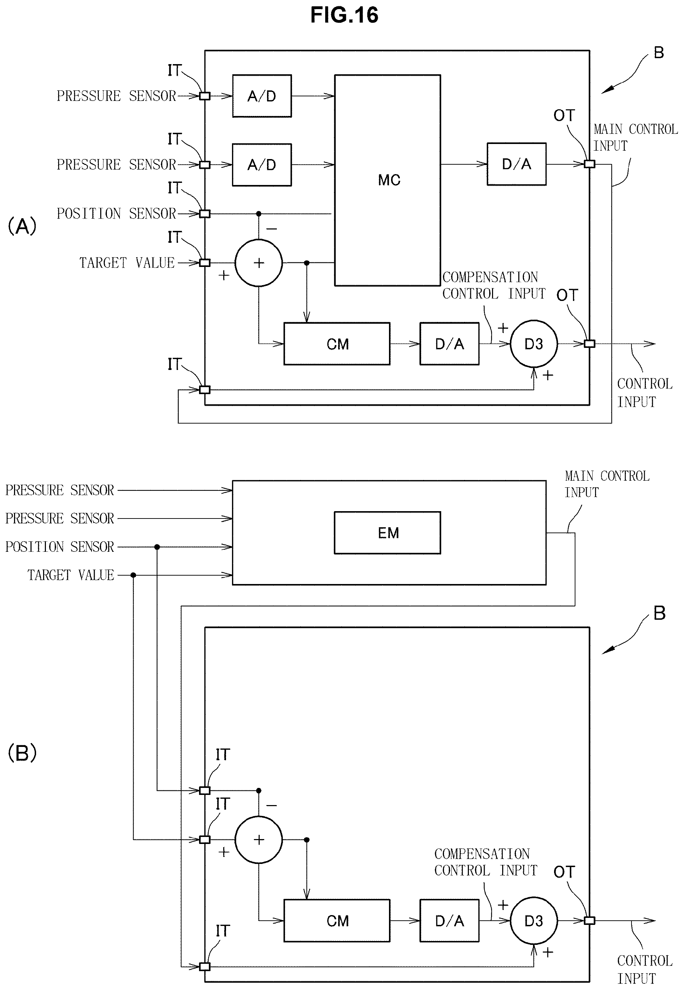

For example, a control board B shown in FIG. 16(A) includes input terminals IT configured to receive a target value and a controlled variable (in the case of FIG. 16(A), signals from pressure sensors and a position sensor). The control board B is equipped with a main controller MC configured to generate, based on the input target value and controlled variable, a control input (main control input) equivalent to that from a typical control device; and a compensator CM having a function equivalent to that of the above-described compensation control input generation unit 15 (i.e., function to generate a compensation control input). The control board B further includes an output generation unit D3, implemented as an adder circuit, configured to generate a control input by combining (adding) the main control input and the compensation control input, and an output terminal OT configured to output the control input generated by the output generation unit D3 to an external device. By replacing the existing control device (control board) with such a control board B, the control input generating method of the present embodiment can be applied to the control of existing equipment.

While in FIG. 16(A), the main control input generated by the main controller MC is once output through an output terminal OT and then reinput through the input terminal to be supplied to the output generation unit D3, a configuration is also possible where the main control input generated by the main controller MC is directly input to the output generation unit D3 without being output through the output terminal OT. Note that in the configuration shown in FIG. 16(A), only the main control input, i.e., without being combined with the compensation control input, may also be output from the output terminal OT and supplied to the control target as the control input. This enhances the flexibility of controlling the control target.

Furthermore, when the control input generating method of the present embodiment is applied to the control of existing equipment, the control board B may be configured to generate a control input including a compensation input by utilizing a control input from an existing control device EM, that is, a control input from an external source. For example, as in the control board B shown in FIG. 16(B), an input terminal IT for receiving a control input from the existing control device EM may be provided in addition to the input terminals IT for receiving the target value and the controlled variable. The output generation unit D3 may be configured to generate a control input by using the control input received from the input terminal IT as the main control input. By simply connecting such a control board B to the existing control device EM, control based on the control input generating method of the present embodiment can be introduced into it.

<Control input generating program>

While in the above embodiment, the control input generating device of the present embodiment is provided in the form of a control board, thereby introducing control based on the control input generating method of the present embodiment, it is also possible to introduce control based on the control input generating method of the present embodiment through a program that implements the method.

That is, control based on the control input generating method of the present embodiment can be applied to the control target by installing a program implementing the method in the control equipment (such as a computer) of the actuator, which is the control target, or of a machine or apparatus that employs such an actuator, or by providing the program to the control equipment via an internet connection. The program may be installed on the control equipment either by providing it via an internet connection or by storing it on a storage medium readable by the control equipment and installing it therefrom.

For example, a program (the control input generating program of the present embodiment) is installed in the control equipment for an existing machine or apparatus, where the program is configured to execute: a first control input generation function to, in response to receiving a target value and a controlled variable as input signals, generate a first control input when an error exists between the target value and the controlled variable; a second control input generation function to, when the controlled variable is varying with time, generate a second control input that increases as the error between the target value and the controlled variable decreases; and an output generation function to generate and output a control input based on the first control input and the second control input. Control based on the control input generating method of the present embodiment can be implemented in the existing machine or apparatus by adding the compensation input generated by the control input generating program of the present embodiment to the control input (main control input) generated by the control equipment of the existing machine or apparatus.

The control input generating program of the present embodiment may also be configured to execute a function to generate a control input corresponding to a main control input. That is, the control input generating program of the present embodiment may also be configured to execute: a function to generate a main control input, a function to generate a compensation input, and a function to generate a control input based on the main control input and the compensation input. In this case, control based on the control input generating method of the present embodiment can be introduced into the control equipment of the existing machine or apparatus by installing the control input generating program of the present embodiment in the control equipment in place of the existing control program.

Examples of storage media in which the control input generating program of the present embodiment can be stored include a floppy® disk, a hard disk, an optical disk, a magneto-optical disk, a CD-ROM, a magnetic tape, a nonvolatile memory card, and a ROM. Furthermore, not only programs that operate independently to execute processing, but also those that operate in conjunction with other software or functions of an expansion board on an operating system (OS) to execute processing, fall within the scope of the various embodiments.

<Note on the controlled variable>

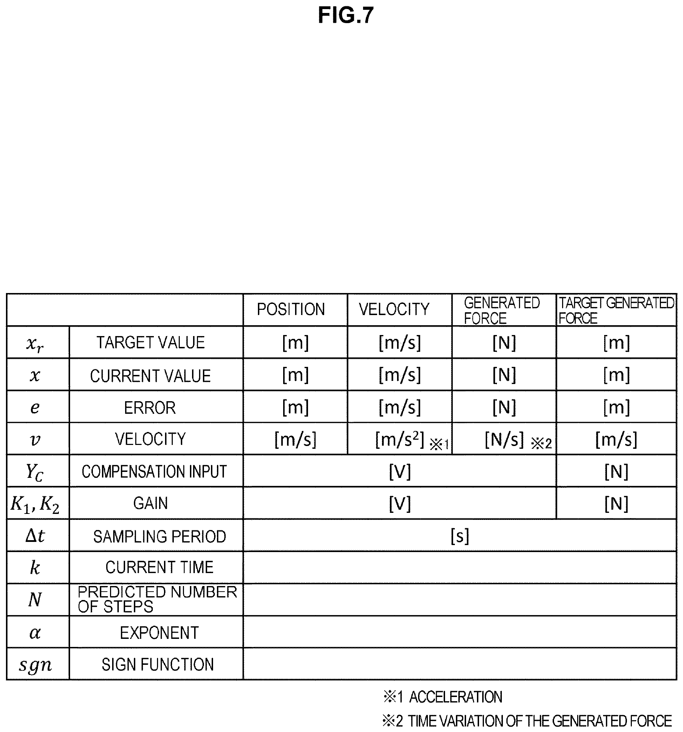

While in the above example, the controlled variable to be controlled by the control input and compensation input generated by the control input generating device of the present embodiment is the amount of displacement of the pneumatic cylinder 2, that is, the control input generating device of the present embodiment is used in a control system for performing positioning control. However, the controlled variable to be controlled by the control input and compensation input generated by the control input generating device of the present embodiment is not limited to the position described above. For example, by using Equation 6 below and setting the parameters as shown in the table of FIG. 7, a compensation input Yc (or control input) can also be generated for controlling the displacement velocity of the pneumatic cylinder 2 or the force to be generated by it, in the same manner as controlling the position of the pneumatic cylinder 2.

$$\text{Equation 6:}$$

$$Yc = K_1 \cdot \text{sgn}(e) - K_2/N^\alpha \cdot \text{sgn}(v)$$

$$N = e/(v \cdot \Delta t) = (x_r(k) - x(k))/(x(k) - x(k - 1))$$

where

xr(k): target value,
x(k): current value, and
x(k - 1): current value in the previous step.

The value of N in Equation 6 may also be calculated using Equation 6-1 below.

$$\text{Equation 6-1:}$$

$$N(xr, x) = (xr(k) - x(k))/(x(k) - x(k - 1))$$

where

xr(k): target value,
x(k): current value, and
x(k - 1): current value in the previous step.

For example, when a force generation control system is incorporated within the position control system as shown in FIG. 3, the control input generating device of the present embodiment can be used to generate a compensation input within that control system, which controls the force generated by the above-described pneumatic cylinder 2.

<Note on the estimation of constants>

As described above, the equation used by the compensation control input generation unit 15 to generate the compensation input Yc requires setting various constants, such as gains. These constants are typically determined through trial and error. That is, the control target (equipment actuated by a pneumatic cylinder or the like) is operated using the control input generating device 1 of the present invention, while varying certain constants, to evaluate its operational behavior. In this manner, the constants are adjusted to achieve an appropriate operational behavior, and the final constants are set accordingly.

For example, when the compensation input is generated using Equation 3 described above, constants such as the gains $K_1$ and $K_2$ and the exponent $\alpha$ are set, and the control target is operated using the compensation input generated with these constants. The operation results are then evaluated, and the combination of constants that produces acceptable evaluation results is set as the final constants.

Setting the constants in this manner may allow suitable constants to be identified in a relatively short time. However, in most cases, this approach requires a substantial number of experiments before constants that achieve the required level of operational accuracy can be identified.

Accordingly, an estimation device that utilizes a machine learning model to estimate constants may be constructed. This makes it possible to estimate appropriate constants even from a small number of experiments, based on the constants applied in those experiments and the obtained operation results.

For example, an evaluation function may be defined to evaluate the results of operation of the control target. Then, training data may be collected that associates the constants set for operating the control target, the results of evaluation of the operation of the control target under the set constants obtained by applying the evaluation function (i.e., the evaluation results), and the evaluation of the experimental results. The machine learning model serving as the estimation device may then be trained using the collected training data. This makes it possible to obtain evaluation results simply by inputting constants into the estimation device, without conducting experiments using the control target.

Non-limiting examples of machine learning models that may be employed in the estimation device include a support vector machine (SVM), a neural network (NN), and a random forest (RF).

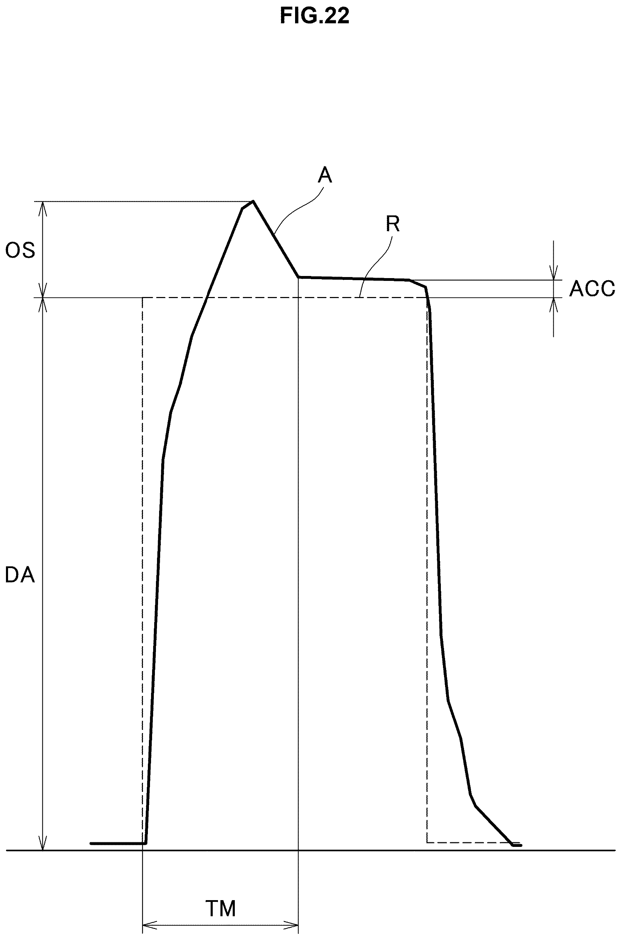

The evaluation function used to evaluate the above-described operational accuracy may be appropriately selected depending on the target to be controlled, the controlled variable, and other factors. For example, when the position of a pneumatic cylinder is to be controlled, the operational accuracy may be evaluated using an evaluation function such as Equation 7 (see FIG. 22). In this case, a smaller evaluation score S1 indicates that the position control is being performed more appropriately (i.e., the actual behavior A is more closely matching the target trajectory R).

Equation 7:

$$S1 = w1 \cdot OR + w2 \cdot PA$$

where

S1: evaluation score,
OR: ratio of the overshoot amount OS to the target displacement amount DA (OS/DA), and
PA: positional accuracy polarity, where

$$PA = 1 \text{ if } ACC > E,$$

$$PA = 0 \text{ if } ACC \le E,$$

and
w1, w2: weights.

The positional accuracy polarity PA is set to 0 if, upon the actual behavior A reaching a steady state, the difference ACC between the target displacement amount DA and the actual displacement amount RA observed during the steady state falls within a predetermined threshold E. Otherwise, it is set to 1.

When an actuation command (target trajectory R) such as that shown in FIG. 22 is executed, Equation 8 below can also be used as an evaluation function. In this evaluation function as well, a smaller evaluation score S2 indicates that the position control is being performed more appropriately (i.e., the actual behavior A is more closely matching the target trajectory R).

Equation 8:

$$S2 = w3 \cdot OS + w4 \cdot ACC + w5 \cdot TM$$

where

S1: evaluation score,
OS: overshoot amount with respect to the target displacement DA,
ACC: difference between the target displacement DA and the actual displacement RA in the steady state,
TM: time period from the start of control until the movement stabilizes, and
w3, w4, w5: weights.

<Note on the target control system>

Adopting the control input generating device 1 of the present embodiment can improve the positioning control accuracy for placing the object M at a target position to a level comparable to the detection accuracy of the position sensor. On the other hand, if there are changes in the external environment that affect the movement of the object M, the positioning control accuracy may decrease during the response to such environmental changes (i.e., during transient response). However, the tracking accuracy to the target trajectory during transient response can be improved by configuring the control input generating device 1 of the present embodiment to serve as a type-II control system with a disturbance observer and implementing feedforward control to cancel the system dynamics.

There is no particular limitation on how the control input generating device 1 of the present embodiment is designed to serve as a type-II control system with a disturbance observer. For example, in the case of the position control system shown in FIG. 3, the control system may be designed such that Gf(s)/(1 - Q(s)·Gf(s)) (where Gf(s) is a transfer function of the force control system) independently includes $1/s^2$ (where 1/s is an integrator). This allows the control input generating device 1 of the present embodiment to serve as a type-II control system with a disturbance observer.

Designing the control input generating device 1 of the present embodiment to serve as a type-II control system with a disturbance observer in this manner can reduce the decrease in tracking accuracy to the target trajectory during transient responses caused by changes in the external environment that affect the movement of the object M, even when such changes occur. In other words, stable movement of the object M can be maintained even in the presence of changes in the external environment, such as load fluctuations, during motion control of the object M.

EXAMPLES

The effect was examined of applying, to a control device employing a typical control method, a compensator that generates a compensation input according to the control input generating method of the present invention (i.e., the compensation control input generation unit of the present invention).

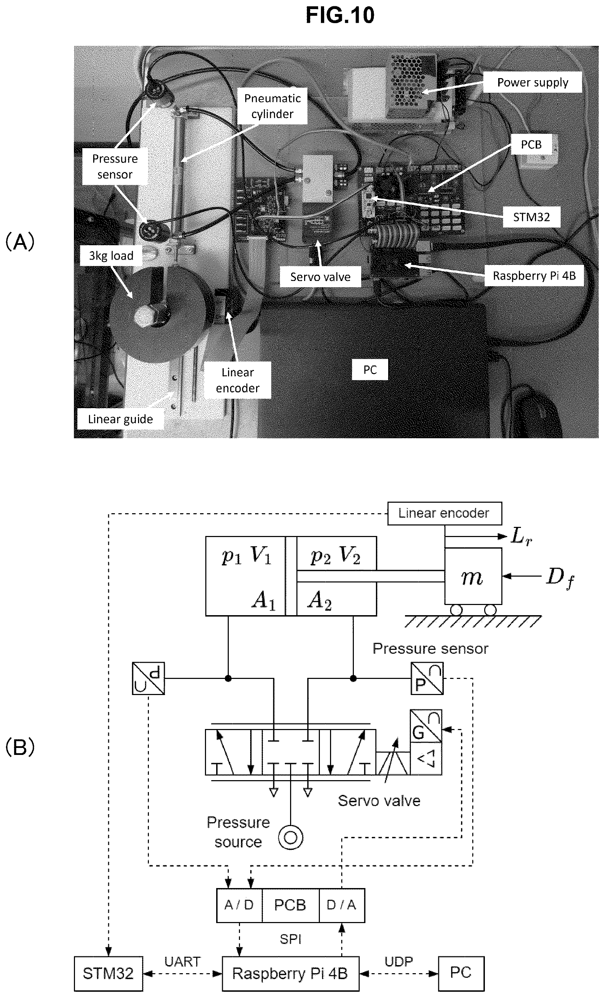

The experiment was conducted using the experimental apparatus shown in FIG. 10(A), which implements the pneumatic drive circuit illustrated in FIG. 10(B), to evaluate the accuracy of positioning the table at a predetermined position through the operation of an actual pneumatic cylinder.

The pneumatic cylinder used in the experimental apparatus was a general-purpose double-acting pneumatic cylinder (manufactured by SMC Corporation, model: CDJ2E16-150Z-B, bore size: 16 mm, rod stroke: 150 mm). The table is supported by a linear guide (manufactured by THK Co., Ltd., model: SHW12CA1UUM190LM) and is configured to move while being guided by the linear guide.

The drive of the double-acting pneumatic cylinder was controlled using a proportional flow control servo valve (manufactured by Festo, model: MPYE-5-M5-010-B). Specifically, the pressures in both cylinder chambers were measured using pressure sensors (manufactured by NIDEC Components Corporation, model: PA-500-103G), and the pressure difference between the two cylinder chambers was adjusted by the servo valve based on the measured values. The supply pressure of the air supplied to the servo valve was 0.3 MPa.

The table position was identified by measuring the displacement of the rod of the double-acting pneumatic cylinder using a linear encoder (manufactured by iC-Haus, model: iC-PZ205 EVAL PZ1M_Z, resolution: 12.5 nm).

The control system for generating the control signal supplied to the servo valve was configured as a type-I feedforward control system with a disturbance observer, as shown in FIG. 3. It was implemented on a PC using RTAI, a real-time extension of the Linux® kernel. The acquisition of pressure data in the control system and voltage application from the control system to the servo valve were performed via SPI communication between various IC chips and a Raspberry Pi 4B. The acquisition of pressure data in the control system was performed by A/D converting the signals supplied from the pressure sensors. The voltage application from the control system to the servo valve was performed by D/A converting the control signals generated by the control system. The displacement data from the linear encoder in the control system was filtered by an STM32 microcontroller to remove noise, after which the data was acquired via UART communication.

The sampling period of the control system is 2 ms, and socket communication via UDP is used between the Raspberry Pi 4B and the PC. The time from the A/D conversion request to the acquisition of the converted value is achieved within 0.5 ms. This enables real-time tasks to be sufficiently carried out.

Since the displacement data from the linear encoder used in this experiment contains noise, the error between the target value and the measured value does not become exactly zero. Thus, the compensator continues to output a compensation input, resulting in chattering near the target value. To address this, the control system used in this experiment is configured not to output a compensation input when the error is equal to or less than a threshold set for the error.

In addition, in extremely low-speed ranges, the effect of noise on the velocity parameter becomes significant, which causes the second control input generation unit of the compensator to become unstable. To address this, the control system used in this experiment is configured not to output the second control input when the velocity is equal to or less than a threshold set for the velocity.

<Example 1>

The control performance of the control input generating method of the present invention is evaluated by incorporating the compensation input generated by a compensator employing the method into the target generated force and control input. In the experiment, the response (position error) to repeated step inputs of 10 mm and 50 mm as target values was examined for two cases: (1) when the compensation input generated by the control input generating method of the present invention was applied (Example 1, see FIG. 3); and (2) when no compensation input was applied (Comparative Example 1, in which the compensation control input generation unit 15 shown in FIG. 3 was omitted).

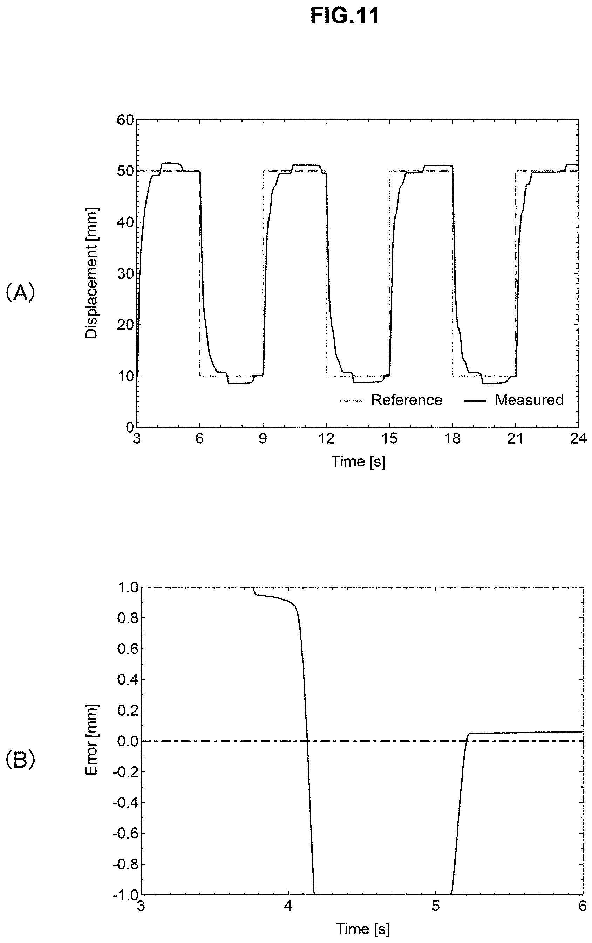

First, the experimental results of Comparative Example 1 are shown in FIG. 11.

FIG. 11(A) is a graph showing the response during the period from 3 to 24 seconds, while FIG. 11(B) is a graph showing the response during the initial step (3 to 6 seconds) of the experimental results in FIG. 11(A), with the position error scale enlarged. The parameters of the main control input generation unit 11 in FIG. 3 were set to Kp = 100 [N/m], Kd = 10 [N/m], and $K_{fu}$ = 12.5 [$N^{-1}$].

As shown in FIG. 11, in the absence of the compensation input, an overshoot of about 2 mm occurred, and a steady-state error of at least about 0.05 mm remained.

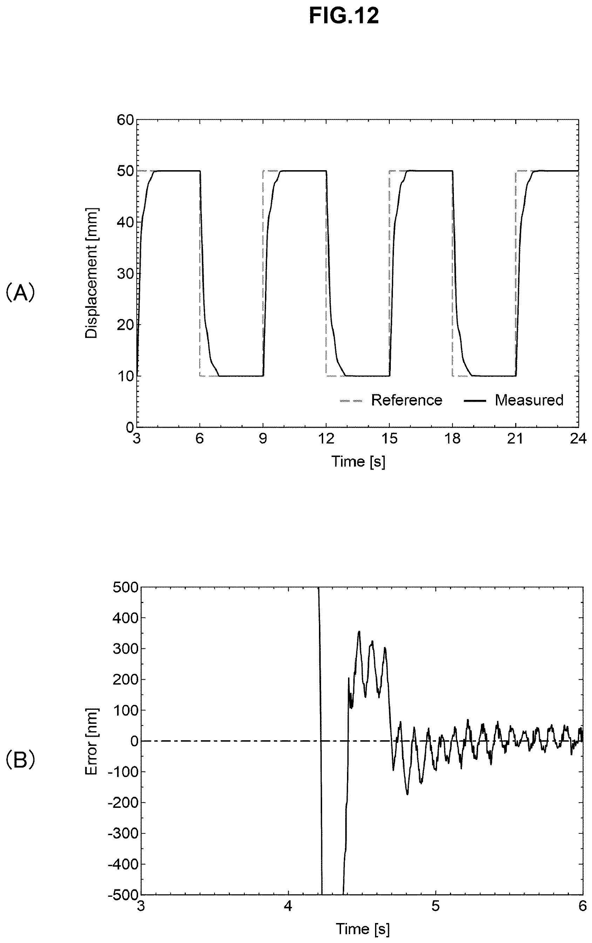

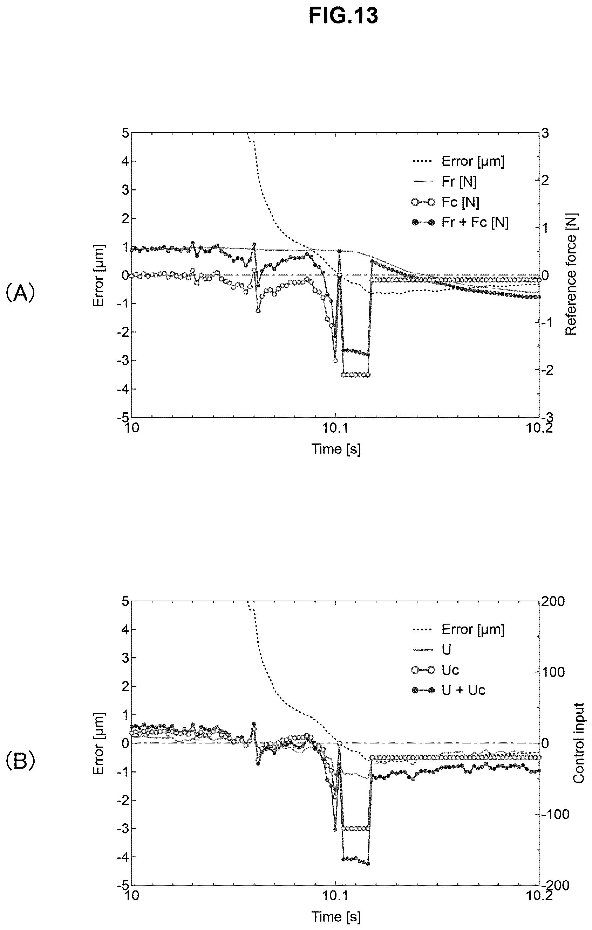

Next, the experimental results of Example 1 are shown in FIGS. 12 and 13.

FIG. 12(A) is a graph showing the response during the period from 3 to 6 seconds, while FIG. 12(B) is a graph showing the response during the initial step (3 to 6 seconds) of the experimental results in FIG. 12(A), with the position error scale enlarged. The parameters of the compensation control input generation unit 15 incorporated into the target generated force were set to $K_1$ = 0.1 N, $K_2$ = 2.0 N, and $\alpha$ = 0.8. The parameters of the compensation control input generation unit 15 incorporated into the control input were set to $K_1$ = 20, $K_2$ = 100, and $\alpha$ = 0.8. The threshold for the error was set to 20 nm, and the threshold for the velocity was set to 40 nm/ms. The other parameters were the same as those in Comparative Example.

It can be seen from FIG. 12 that the application of the compensation input significantly reduces the overshoot compared to when no compensation input is applied, with the steady-state error remaining within 50 nm.

FIG. 13(A) is an enlarged view of the range from 10.0 s to 10.2 s in FIG. 12(A), showing the variation in target generated force with respect to the error.

As shown in FIG. 13(A), the sum of the main input Fr and the compensation input Fc (Yc in FIG. 3) is applied to the force generation control unit. It can be seen that, as the error approaches zero, the compensation input Fc increases in the negative direction, acting as a strong brake. It can also be seen that the compensation input Fc remains at its maximum value after the overshoot, and once the velocity reaches zero, only the first control input Fr acts, causing immediate displacement toward the target value.

FIG. 13(B) shows the variation in control input with respect to the error during the same time period as in FIG. 13(A). Note that the control input is represented as a 12-bit digital value, which corresponds to the voltage applied to the valve.

The sum of the main input U and the compensation input Uc (Yc in FIG. 3) is applied to the valve. It can be seen that, as in the case of the target generated force, the compensation input Uc acts as a strong brake, reducing the overshoot and causing immediate displacement toward the target value (see FIG. 13(B)).

From the above results, it was confirmed that incorporating the compensator employing the control input generating method of the present invention into both the target generated force and the control input enables high-accuracy positioning to the target value, even with the use of a pneumatic actuator.

It was also confirmed in the above example that the steady-state error of the table position can be reduced to within 50 nm, as measured using a linear encoder with a resolution of 12.5 nm. On the other hand, when a compensator employing the control input generating method of the present invention is used, positioning accuracy commensurate with the detection accuracy of the sensor can be obtained by improving the sensor's detection accuracy.

In the following experiments, it was confirmed that positioning accuracy commensurate with the sensor's detection accuracy can be achieved by changing the sensor for detecting the table position and using a compensator employing the control input generating method of the present invention.

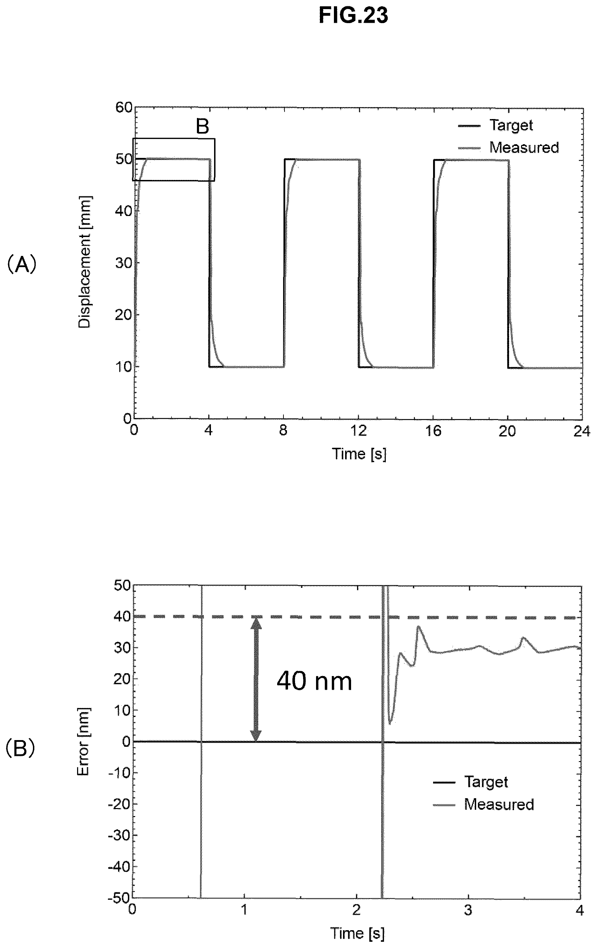

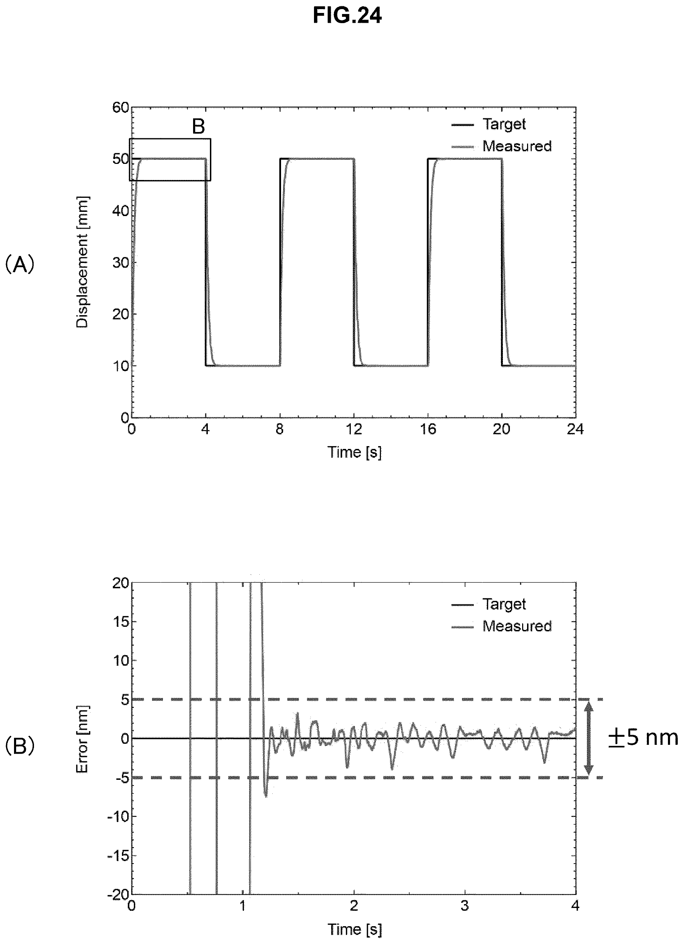

The experimental results are shown in FIGS. 23 and 24.

FIGS. 23 and 24 show the experimental results obtained by conducting the same experiment as in Example 1, using a linear encoder (manufactured by Magnescale, model: BL50H) with a resolution of 6.1 picometers as the sensor for detecting the table position.

Note that the experiment shown in FIG. 23 was conducted under the same conditions as in Example 1, except that: the control system used was not a feedforward system with a disturbance observer, but a system that generates the main control input signal by PID control; the compensatory input signal was added to this system to form the control input signal; and the above-described sensor was used.

The experiment shown in FIG. 24 was conducted under the same conditions as in Example 1, except for the use of the above-described sensor.

FIG. 23(A) is a graph of the experimental results showing the response during the period from 0 to 24 seconds. FIG. 23(B) is a graph showing the response during the initial step (0 to 4 seconds) of the experimental results in FIG. 23(A), depicting an enlarged view of part B. Similarly, FIG. 24(A) is a graph of the experimental results showing the response during the period from 0 to 24 seconds. FIG. 24(B) is a graph showing the response during the initial step (0 to 4 seconds) of the experimental results in FIG. 24(A), depicting an enlarged view of part B.

As shown in FIG. 23, it was confirmed that even with the use of a control system that generates the main control input signal by PID control, simply incorporating a compensator that employs the control input generating method of the present invention can reduce the steady-state error to within 40 nm.

As shown in FIG. 24, it was also confirmed that even with the use of the exact same control system as in Example 1, improving the resolution of the sensor can reduce the steady-state error to within $\pm 5$ nm.

From these results, it was confirmed that incorporating a compensator employing the control input generating method of the present invention into both the target generated force and the control input enables high-accuracy positioning to the target value, regardless of the control system and even with the use of a pneumatic actuator. It was also confirmed that, even with the use of the same control system and compensator, positioning accuracy commensurate with the sensor's resolution can be achieved by changing the accuracy (resolution) of the position detection sensor.

<Example 2>

In Example 2, it was confirmed that incorporating a compensator employing the control input generating method of the present invention into both the target generated force and the control input enables high-accuracy positioning to the target value, even in response to small changes in the target value.

In Example 2, after reaching the steady state in response to a step input with a target value of 50 mm, a stepwise input with a step height of 0.1 $\mu$m was continuously applied every 3 seconds, and the resulting response (position error) was evaluated. The experiment was conducted under the same conditions as in Example 1, except for the continuous application of a stepwise input with a step height of 0.1 $\mu$m every 3 seconds.

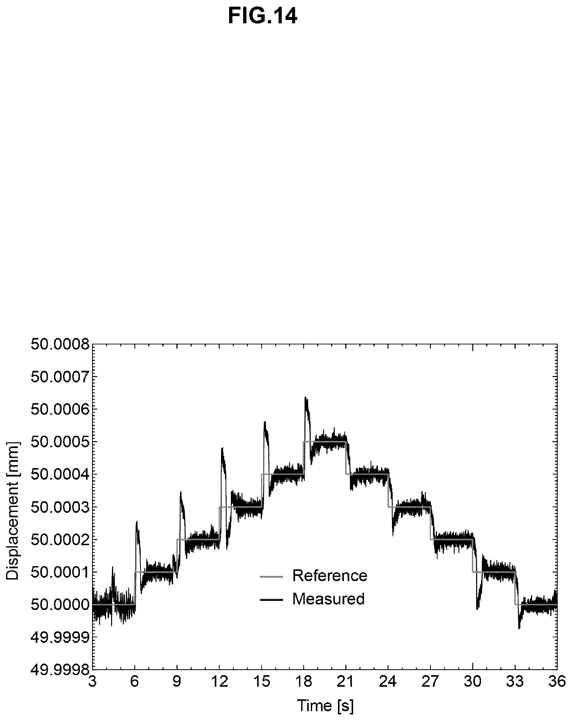

The results are shown in FIG. 14.

As shown in FIG. 14, although a larger overshoot (about 1.5 $\mu$m) than that in Example 1 occurs due to the continuous application of the stepwise input with a step height of 0.1 $\mu$m every 3 seconds, it can be seen that the steady-state error remains within $\pm 50$ nm.

Also shown are the results of the experiment that was conducted under the same conditions as in Example 2, except that a linear encoder (manufactured by Magnescale, model: BL50H) with a resolution of 6.1 picometers was used to detect the table position, and a stepwise input with a step height of 1 nm was continuously applied every 2 seconds.

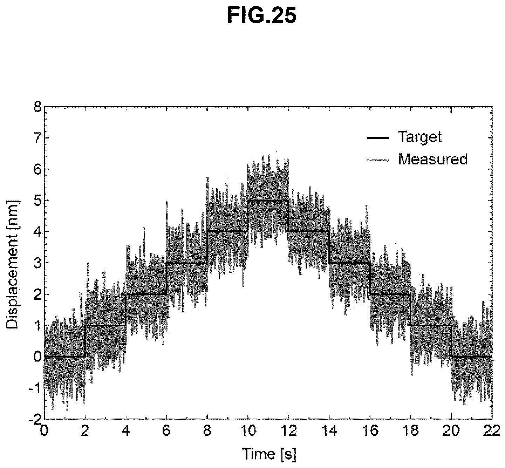

The results are shown in FIG. 25.

In FIG. 25, the vertical axis is set such that the target value of 50 mm corresponds to zero.

As shown in FIG. 25, even with the continuous application of a stepwise input with a step height of 1 nm every 2 seconds, it can be seen that the response can follow the step input (target trajectory) almost perfectly, with fluctuations of about $\pm 1$ nm around the target trajectory.

From these results, it was confirmed that, by incorporating a compensator employing the control input generating method of the present invention into both the target generated force and the control input, high-accuracy positioning to the target value and precise tracking of variations in the target value can be achieved using a pneumatic actuator, even in response to minute changes in the target value.

<Example 3>

In Example 3, it was confirmed that incorporating a compensator employing the control input generating method of the present invention into both the target generated force and the control input enables high-accuracy positioning to the target value even under the application of an external force.

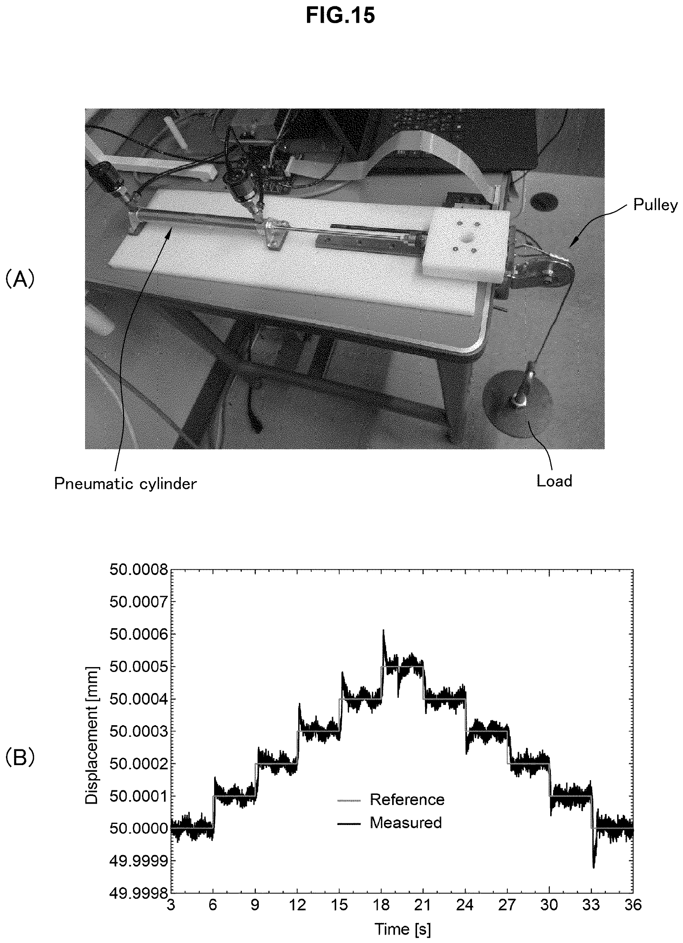

In Example 3, the response (position error) to a step feed of 0.1 $\mu$m was evaluated, with a 3 kg load suspended via a pulley as shown in FIG. 15(A). The experiment was conducted under the same conditions as in Example 2, except for the suspension of the 3 kg load and the use of a 0.1 $\mu$m step feed.

The results are shown in FIG. 15(B).

The tensile force corresponded to approximately 50% of the maximum output force calculated based on the supply pressure and the pressure-receiving area of the cylinder. Even under such conditions, positioning could be performed with a level of accuracy comparable to that obtained in the absence of the tensile force.

From these results, it was confirmed that incorporating a compensator employing the control input generating method of the present invention into both the target generated force and the control input enables high-accuracy positioning to the target value using a pneumatic actuator, even under the application of an external force.

<Example 4>

In Example 4, it was confirmed that, even under load fluctuations during operation, high-accuracy positioning to the target value can be achieved by designing the control system, into which a compensator employing the control input generating method of the present invention is incorporated, as a Type-2 control system equipped with a disturbance observer.

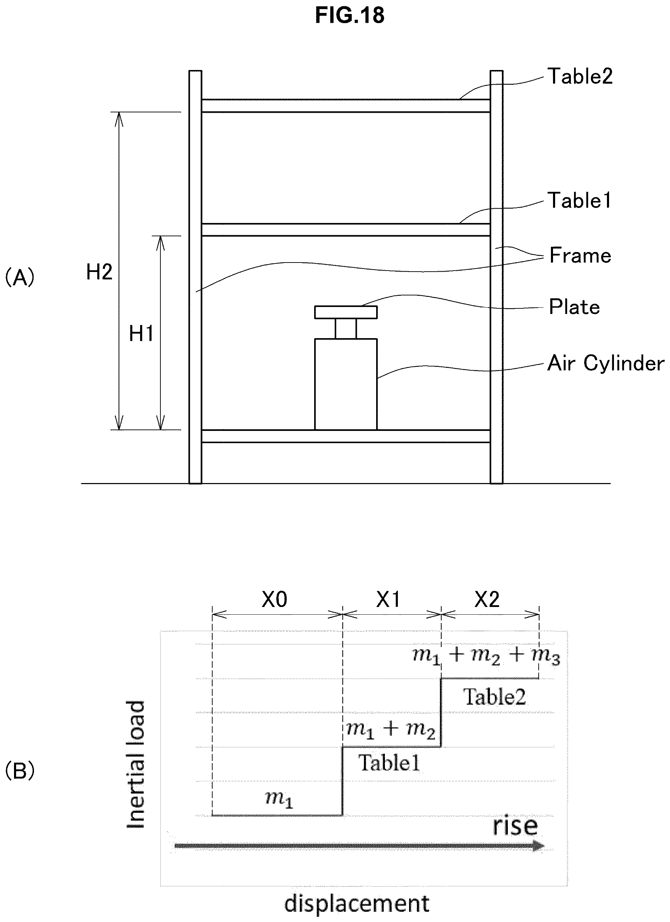

In Example 4, the motion of the table during lifting to a predetermined position by the operation of a pneumatic cylinder was evaluated, with the load applied to the cylinder varied as described below. In the experiments, the motion of the table during lifting to the predetermined position was evaluated under the following three conditions: (1) starting from a no-load condition, a load was applied during motion; (2) starting from a condition with an initial constant load, an additional load was applied during motion; and (3) starting from a no-load condition, a first load was applied during motion, followed by applying a second additional load during motion (see FIG. 18(B)). The experiments were conducted under the same conditions as in Example 1, except for extending and retracting the pneumatic cylinder in the vertical direction and varying the applied load.

The no-load condition refers to a state in which only the weight of the plate attached to the distal end of the cylinder (denoted as "m1" in FIG. 18(B)) is applied. The load applied during motion in Experiment (1), the first load in Experiment (3), and the initial load in Experiment (2) each correspond to "m2" in FIG. 18(B). The additional load applied during motion in Experiment (2) and the second load in Experiment (3) each correspond to "m3" in FIG. 18(B).

In Experiments (1) to (3), the apparatus is configured as follows.

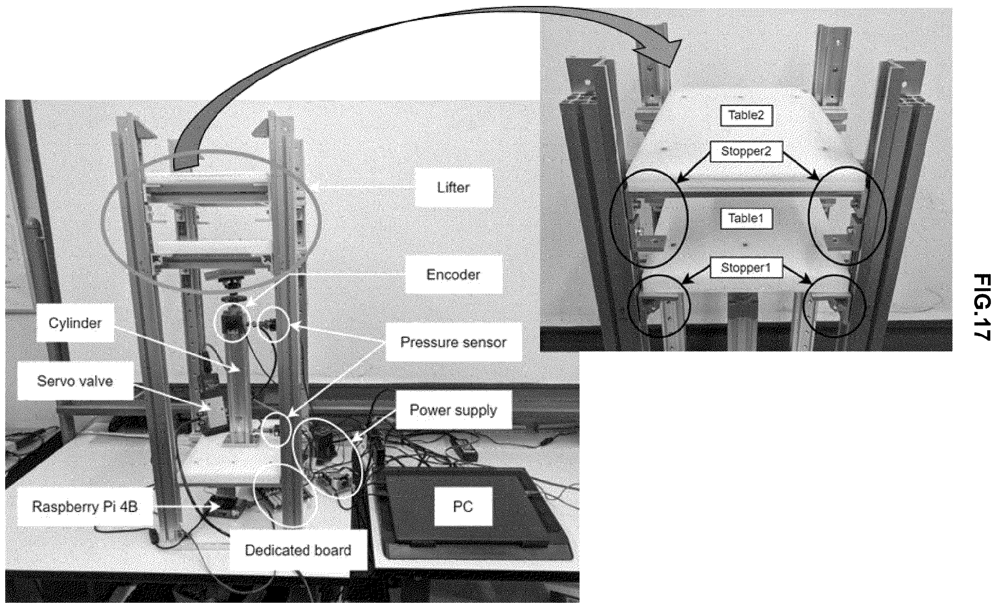

First, as shown in FIG. 17 and FIG. 18(A), two tables (Tables 1 and 2, each weighing 3 kg) supported by a frame are positioned at different heights along the movement path of the pneumatic cylinder. These two tables are guided by the frame so as to be movable in the vertical direction, but are mounted on the frame in such a manner that they cannot move downward beyond respective predetermined heights. The pneumatic cylinder is installed so as to contact the two tables from below. That is, the pneumatic cylinder is installed with its axial direction oriented parallel to the vertical direction, so that it extends and retracts along the vertical direction. A plate is attached to the distal end of the rod of the pneumatic cylinder to stably support the tables.

<Experiments (1) through (3)>

Experiments (1) through (3) are conducted as follows.

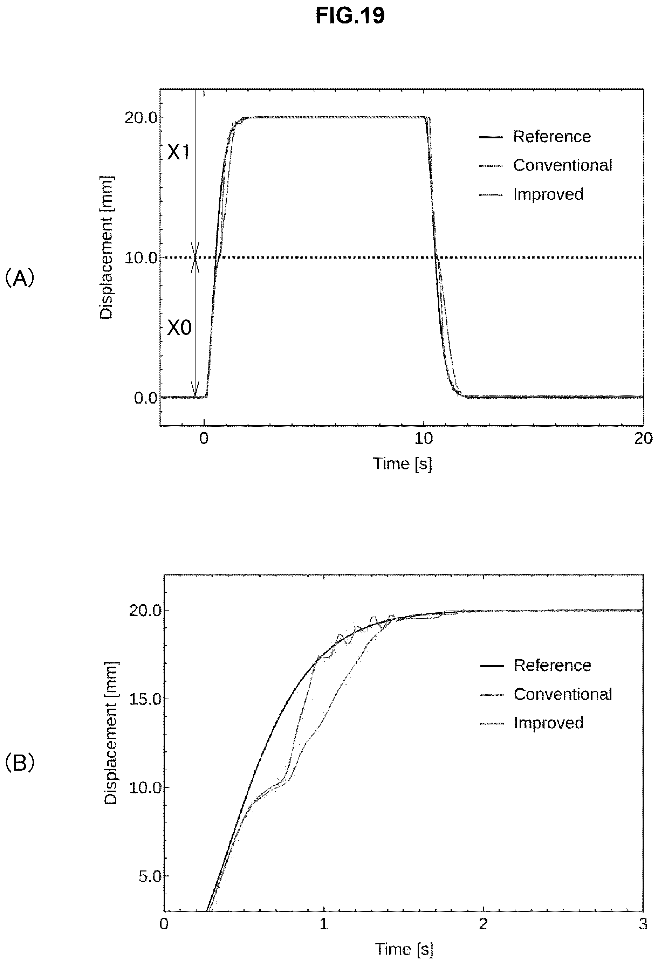

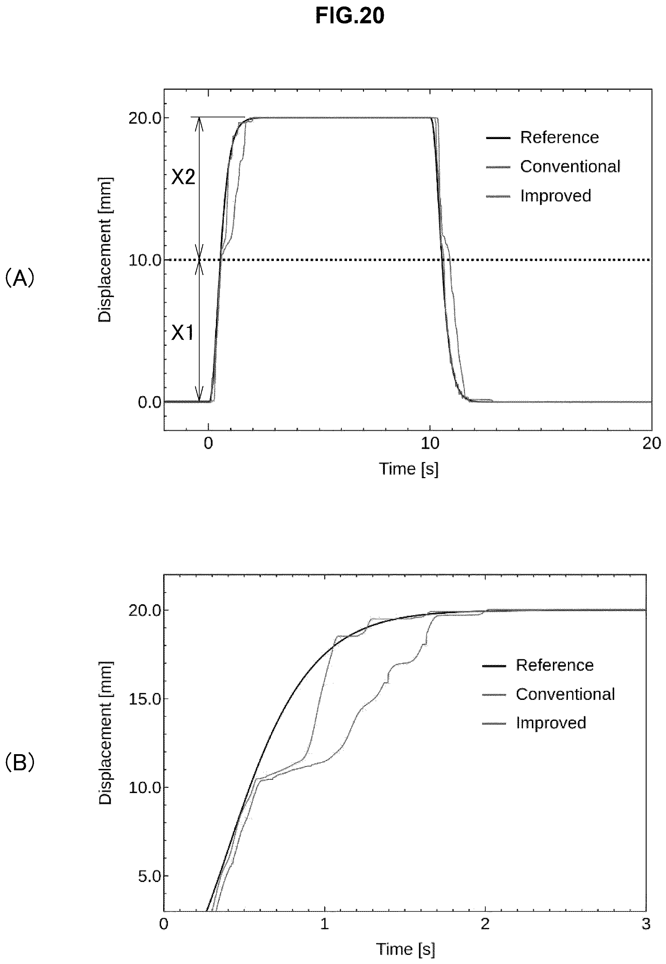

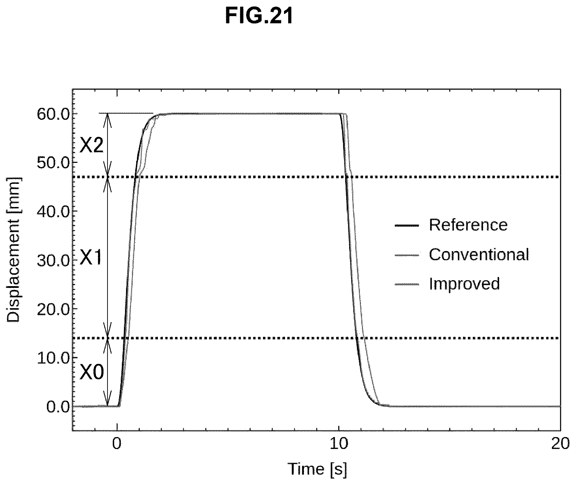

In these experiments, the position control by the pneumatic cylinder in response to the input of a control signal (Reference, target value) for controlling the operation of the pneumatic cylinder, as shown in FIGS. 19 through 21, was evaluated for the following two cases: (1) a system was designed as a Type-1 control system with a disturbance observer, incorporating a compensator employing the control input generating method of the present invention (Conventional + FF, Device 1); and (2) a system was designed as a Type-2 control system with a disturbance observer, also incorporating a compensator employing the control input generating method of the present invention (Improved + FF, Device 2). Note that both Devices 1 and 2 perform feedforward (FF) control.

<Experiment (1)>

Experiment (1) starts with the pneumatic cylinder in a retracted state (i.e., the state shown in FIG. 18(A)). Upon initiation of the experiment, the pneumatic cylinder is extended. Thus, it extends with the weight m1 (plate weight) applied, i.e., under the no-load condition (during period X0 in FIG. 18(B)), thereby coming into contact with Table 1 and lifting it. That is, at the position where Table 1 is located, the weight m2 of Table 1 is added as a load, resulting in the load applied to the pneumatic cylinder changing from m1 to m1 + m2. After coming into contact with Table 1, the pneumatic cylinder continues to extend under the load of m1 + m2 (during period X1 in FIG. 18(B)). Then, before Table 1 comes into contact with Table 2, the pneumatic cylinder is retracted. As the pneumatic cylinder retracts, Table 1 is held at its original position by the frame, causing a change in the load applied to the pneumatic cylinder. In other words, as the pneumatic cylinder retracts, the load decreases by the weight m1 of Table 1 when Table 1 is held at its original position. The pneumatic cylinder then retracts to its original length under the initial load of m1.

<Experiment (2)>

In experiment (2), the pneumatic cylinder is first extended from the retracted state (i.e., the state shown in FIG. 18(A)), and the experiment starts from the point where the plate has come into contact with Table 1 and the weight m2 of Table 1 is added to the pneumatic cylinder (i.e., the point where the load of m1 + m2 is applied). Upon initiation of the experiment, the pneumatic cylinder is extended. Thus, it extends under the load of m1 + m2 (during period X1 in FIG. 18(B)), and Table 1 comes into contact with Table 2 and lifts it. That is, at the position where Table 2 is located, the weight m3 of Table 2 is added as an additional load, resulting in the load applied to the pneumatic cylinder changing from m1 + m2 to m1 + m2 + m3. After Table 1 comes into contact with Table 2, the pneumatic cylinder continues to extend under the load of m1 + m2 + m3 (during period X2 in FIG. 18(B)). After extending by a predetermined amount, the pneumatic cylinder is retracted. As the pneumatic cylinder retracts, Table 2 is held at its original position by the frame, causing a change in the load applied to the pneumatic cylinder. In other words, as the pneumatic cylinder retracts, the load decreases by the weight m3 of Table 2 when Table 2 is held at its original position. The pneumatic cylinder then retracts to its original length under the initial load of m1 + m2.

<Experiment (3)>

Experiment (3) starts with the pneumatic cylinder in a retracted state (i.e., the state shown in FIG. 18(A)). Upon initiation of the experiment, the pneumatic cylinder is extended. Thus, it extends with the weight m1 applied, i.e., under the no-load condition (during period X0 in FIG. 18(B)), and the plate first comes into contact with the lower Table 1 and lifts it. That is, at the position where Table 1 is located, the weight m2 of Table 1 is added as a load, resulting in the load applied to the pneumatic cylinder increasing from m1 to m1 + m2. After coming into contact with Table 1, the pneumatic cylinder continues to extend under the load of m1 + m2 during this period (i.e., period X1 in FIG. 18(B)). Eventually, Table 1 comes into contact with Table 2, and the pneumatic cylinder lifts both Tables 1 and 2 in their stacked state. That is, at the position where Table 2 is located, the weight m3 of Table 2 is added as an additional load, resulting in the load applied to the pneumatic cylinder changing from m1 + m2 to m1 + m2 + m3. After Table 1 comes into contact with Table 2, the pneumatic cylinder continues to extend under the load of m1 + m2 + m3 during this period (i.e., period X2 in FIG. 18(B)). After extending by a predetermined amount, the pneumatic cylinder starts to extend and retract. Thus, Tables 1 and 2 are held at their original positions by the frame, causing a change in the load applied to the pneumatic cylinder. In other words, as the pneumatic cylinder extends and retracts, the load decreases by the weight m2 of Table 2 when Table 2 is held at its original position, and further decreases by the weight m1 of Table 1 when Table 1 is held at its original position. The pneumatic cylinder then retracts to its original length under the initial load of m1.
The results are shown in FIGS. 19 through 21.

<Experiments (1) through (3)>

In can be seen from FIGS. 19 through 21 that, in all of Experiments (1) through (3), the response of Device 1 exhibits fluctuations that generally follow the target value, although there is a slight delay in reaching the target value during load changes.
On the other hand, it can be seen that the response of Device 2 shows minimal delay with respect to the target value and exhibits fluctuations nearly identical to the target value.
From the above results, it was confirmed that, by using a compensator employing the control input generating method of the present invention, the operation of the pneumatic cylinder can be controlled to exhibit good tracking performance with respect to the target value, even in the presence of load fluctuations. In particular, it was confirmed that, by designing the control system as a Type-2 control system with a disturbance observer, the operation of the pneumatic cylinder can be controlled to produce a movement that is nearly identical to the target value, even in the presence of load fluctuations.

Industrial Applicability

The control input generating device of the present invention is suitable as a device for generating a control input to control the operation of an actuator driven by pneumatic pressure.

Reference Signs List

1: Control system
2: Pneumatic cylinder
3: Piping
4: Pneumatic source
5: Servo valve
10: Control device
11: Main control input generation unit
15: Compensation control input generation unit
16: First control input generation function
17: Second control input generation function
17a: Time-to-arrival calculation function 17a
17b: Predicted step number calculation function
18: Output generation function
S1: First control input
S2: Second control input
Yc: Compensation input
L: Controlled variable
Lr: Target value
e: Error

**Claims**

1. A control input generating device configured to generate a control input for controlling a pneumatic actuator, comprising:

   a first control input generation function configured to generate a first control input when an error exists between a target value and a controlled variable;
   a second control input generation function configured to, when the controlled variable is varying with time, generate a second control input that increases as the error between the target value and the controlled variable decreases; and
   an output generation function configured to generate the control input based on the first control input and the second control input.

2. The control input generating device according to claim 1, wherein the first control input generation function includes:

   a function configured to generate a constant steady-state control input as the first control input; or
   a function configured to, when the controlled variable is varying with time, generate a combination of a constant steady-state control input and a variable control input as the first control input, the variable control input decreasing as the error between the target value and the controlled variable decreases.

3. The control input generating device according to claim 1, wherein the second control input generation function is configured to:

   calculate a predicted number of sampling steps N required for the controlled variable to match the target value, based on the error between the target value and the controlled variable and an operating state of the pneumatic actuator; and
   generate the second control input based on the predicted number of sampling steps N such that the second control input increases as the predicted number of sampling steps N decreases.

4. The control input generating device according to claim 2 or 3, wherein

   the first control input generation function is configured to generate the first control input S1 based on Equation 1,
   the second control input generation function is configured to generate the second control input S2 based on Equation 2, and
the output generation function is configured to generate the control input based on Equation 3,

$$\text{Equation 1:}$$

$$S1 = K_1 \cdot \mathrm{sgn}(e)$$

$$\text{Equation 2:}$$

$$S2 = K_2/N^{\alpha} \cdot \mathrm{sgn}(v)$$

$$\text{Equation 3:}$$

$$Yc = K_1 \cdot \mathrm{sgn}(e) - K_2/N^{\alpha} \cdot \mathrm{sgn}(v)$$

where

$e$: error between the target value and the controlled variable,
$v$: displacement velocity of the pneumatic actuator,
$a$: exponent for adjusting timing at which a breaking effect becomes dominant to suppress operation of the pneumatic actuator,
$K_1$: gain for generating a propulsive force,
$K_2$: gain for generating a braking force, and
$N$: predicted number of sampling steps.

5. The control input generating device according to claim 4, wherein

the first control input generation function is configured to set the gain $K_1$ for compensating for nonlinear friction in the pneumatic actuator and for generating a propulsive force, based on Equation 2-1, and
the second control input generation function is configured to set the gain $K_2$ for generating a braking force to reduce overshoot with respect to the target value, based on Equation 2-2,

$$\text{Equation 2-1:}$$

$$K_1 = Ka \qquad\qquad \text{if } |e| > Eth$$

$$K_1 = Ka/(Eth \cdot |e|) \qquad \text{if } |e| \leq Eth$$

where

$Ka$: predefined control input,
$Eth$: predefined displacement, and
$|e|$ : absolute value of the error $e$,

$$\text{Equation 2-2:}$$

$$K_2 = Kb \qquad\qquad \text{if } |v| > Vth$$

$$K_2 = 0 \qquad\qquad \text{if } |v| \leq Vth$$

where

$Kb$: predefined control input,
$Vth$: predefined displacement velocity, and
$|v|$ : absolute value of velocity $v$.

6. The control input generating device according to claim 3, wherein the second control input generation function includes:

a time-to-arrival calculation function configured to calculate a time Ta required for the controlled variable to match the target value, based on the error between the target value and the controlled variable; and
a predicted step number calculation function configured to calculate a predicted number of sampling steps N = Ta/Δt, which is a value obtained by dividing the time Ta by a sampling period Δt used to detect the error between the target value and the controlled variable,
wherein the predicted step number calculation function is configured to, when the predicted number of sampling steps N is smaller than a predetermined threshold, set the predicted number of sampling steps N to the threshold.

7. The control input generating device according to claim 6, wherein the time-to-arrival calculation function is configured to calculate the time to arrival Ta based on Equation 4,

$$\text{Equation 4:}$$

$$(1/2)\cdot a\cdot Ta^2 + v\cdot Ta - e = 0$$

where

a: displacement acceleration of the pneumatic actuator,
v: displacement velocity of the pneumatic actuator,
Ta: time to arrival (difference between arrival time and current time), and
e: error (difference between a target position and a current position).

8. The control input generating device according to claim 3, wherein the second control input generation function is configured to calculate the predicted number of sampling steps N based on Equation 5,

$$\text{Equation 5:}$$

$$N = e/\Delta L = e/(v\cdot \Delta t)$$

where

e: error between the target value and the controlled variable,
v: displacement velocity of the pneumatic actuator, and
ΔL: amount of change in displacement over one sampling period.

9. The control input generating device according to claim 1, wherein the target value is a target position of an object actuated by the pneumatic actuator, a drive velocity of the pneumatic actuator, or a pressure generated by the pneumatic actuator.

10. A control device configured to control a pneumatic actuator, comprising the control input generating device according to claim 1.

11. A control device configured to control a pneumatic actuator, comprising:

a main control input generation unit configured to generate a main control input for controlling the pneumatic actuator; and
a compensation control input generation unit configured to generate a compensation control input for correcting the main control input,
wherein the compensation control input generation unit is the control input generating device according to claim 1.

12. The control device according to claim 10 or 11, wherein the control device comprises a Type-2 control system with a disturbance observer.

13. The control device according to claim 12, wherein the control device is configured to perform feedforward control.

**14.** An actuator comprising:

an actuating unit configured to be driven by pneumatic pressure; and
a control unit configured to control operation of the actuating unit,
wherein the control unit is the control device according to claim 10 or 11.

**15.** An control computation circuit configured to receive a target value and a controlled variable as input signals, comprising:

a first control input generation unit configured to generate a first control input when an error exists between the target value and the controlled variable;
a second control input generation unit configured to, when the controlled variable is varying with time, generate a second control input that increases as the error between the target value and the controlled variable decreases; and
an output generation unit configured to generate and output a control input based on the first control input and the second control input.

**16.** A control board comprising:

an input terminal configured to receive a target value and a controlled variable as input signals; and
an output terminal configured to generate and output a control input,
wherein the control board includes:

a main controller configured to generate a main control input based on signals received from the input terminal;
a compensator configured to generate a compensation control input based on signals received from the input terminal; and
an output generation unit, implemented as an adder circuit, configured to generate a control input by combining the main control input and the compensation control input and to supply the control input to the output terminal,

wherein the compensator includes:

a first control input generation function configured to generate a first control input when an error exists between the target value and the controlled variable;
a second control input generation function configured to, when the controlled variable is varying with time, generate a second control input that increases as the error between the target value and the controlled variable decreases; and
an output generation function configured to generate and output a control input based on the first control input and the second control input.

**17.** A control board comprising:

an input terminal configured to receive a target value and a controlled variable as input signals; and
an output terminal configured to generate and output a control input,
wherein the control board includes:

a compensator configured to generate a compensation control input based on signals received from the input terminal; and
an output generation unit, implemented as an adder circuit, configured to generate a control input by combining the compensation control input and a control input supplied from an external source and to supply the generated control input to the output terminal,

wherein the compensator includes:

a first control input generation function configured to generate a first control input when an error exists between the target value and the controlled variable;
a second control input generation function configured to, when the controlled variable is varying with time, generate a second control input that increases as the error between the target value and the controlled variable decreases; and
an output generation function configured to generate and output a control input based on the first control input and the second control input.

18. A control input generating method for generating a control input to control a pneumatic actuator, comprising:

generating a first control input when an error exists between a target value and a controlled variable;
generating, when the controlled variable is varying with time, a second control input that increases as the error between the target value and the controlled variable decreases; and
generating the control input based on the first control input and the second control input.

19. The control input generating method according to claim 18, wherein

the first control input is a constant steady-state control input, or
when the controlled variable is varying with time, the first control input is a combination of a constant steady-state control input and a variable control input that decreases as the error between the target value and the controlled variable decreases.

20. The control input generating method according to claim 18, comprising:

calculating a predicted number of sampling steps N required for the controlled variable to match the target value, based on the error between the target value and the controlled variable and an operating state of the pneumatic actuator; and
generating the second control input based on the predicted number of sampling steps N such that the second control input increases as the predicted number of sampling steps N decreases.

21. The control input generating method according to claim 18 or 19, comprising:

generating the first control input S1 based on Equation 1;
generating the second control input S2 based on Equation 2; and
generating the control input based on Equation 3,

$$\text{Equation 1:}$$

$$S1 = K_1 \cdot sgn(e)$$

$$\text{Equation 2:}$$

$$S2 = K_2/N^\alpha \cdot sgn(v)$$

$$\text{Equation 3:}$$

$$Yc = K_1 \cdot sgn(e) - K_2/N^\alpha \cdot sgn(v)$$

where

e: error between the target value and the controlled variable,
v: displacement velocity of the pneumatic actuator,
a: exponent for adjusting timing at which a breaking effect becomes dominant to suppress operation of the pneumatic actuator,
$K_1$: gain for generating a propulsive force,
$K_2$: gain for generating a braking force, and
N: predicted number of sampling steps.

22. The control input generating method according to claim 21, comprising:

setting the gain $K_1$ for compensating for nonlinear friction in the pneumatic actuator and for generating a propulsive force, based on Equation 2-1; and
setting the gain $K_2$ for generating a braking force to reduce overshoot with respect to the target value, based on Equation 2-2,

Equation 2-1:

$$K_1 = Ka \qquad \text{if } |e| > Eth$$

$$K_1 = Ka/(Eth \cdot |e|) \qquad \text{if } |e| \le Eth$$

where

Ka: predefined control input,
Eth: predefined displacement, and
$|e|$: absolute value of the error e,

Equation 2-2:

$$K_2 = Kb \qquad \text{if } |v| > Vth$$

$$K_2 = 0 \qquad \text{if } |v| \le Vth$$

where

Kb: predefined control input,
Vth: predefined displacement velocity, and
$|v|$: absolute value of velocity v.

23. The control input generating method according to claim 20, comprising:

calculating a time Ta required for the controlled variable to match the target value, based on the error between the target value and the controlled variable;
calculating a predicted number of sampling steps $N = Ta/\Delta t$, which is a value obtained by dividing the time Ta by a sampling period $\Delta t$ used to detect the error between the target value and the controlled variable; and
when the predicted number of sampling steps N is smaller than a predetermined threshold, setting the predicted number of sampling steps N to the threshold.

24. The control input generating method according to claim 23, comprising:
calculating the time to arrival Ta based on Equation 4,

Equation 4:

$$(1/2) \cdot a \cdot Ta^2 + v \cdot Ta - e = 0$$

where

a: displacement acceleration of the pneumatic actuator,
v: displacement velocity of the pneumatic actuator,
Ta: time to arrival (difference between arrival time and current time), and
e: error (difference between a target position and a current position).

25. The control input generating device according to claim 20, wherein the second control input generation function is configured to calculate the predicted number of sampling steps N based on Equation 5,

Equation 5:

$$N = e/\Delta L = e/(v \cdot \Delta t)$$

where

    e: error between the target value and the controlled variable,
    v: displacement velocity of the pneumatic actuator, and
    $\Delta L$: amount of change in displacement over one sampling period.

26. The control input generating method according to claim 18, wherein the target value is a target position of an object actuated by the pneumatic actuator, a drive velocity of the pneumatic actuator, or a pressure generated by the pneumatic actuator.

27. A control input generating program configured to cause a control device for controlling operation of a pneumatic actuator to execute the control input generating method according to any one of claims 18 to 25.

28. A storage medium having stored therein the control input generating program according to claim 27.

# FIG.1

# FIG.2

# FIG.3

# FIG.4

$$Y_c = K_1 \mathrm{sgn}(e) - \frac{K_2}{N^\alpha} \mathrm{sgn}(v)$$

**TARGET POSITION**

| $v$ \\ $Y_c$ , $e$ | $-$ | $0$ | $+$ |
|---|---|---|---|
| $-$ | $-K_1 + \dfrac{K_2}{N^\alpha}$ | $K_2$ | $K_1 + K_2$ |
| $0$ | $-K_1$ | $0$ | $K_1$ |
| $+$ | $-K_1 - K_2$ | $-K_2$ | $K_1 - \dfrac{K_2}{N^\alpha}$ |

## FIG.5

$$Y_c = K_1 \mathrm{sgn}(e) - \frac{K_2}{N^\alpha} \mathrm{sgn}(v)$$

# FIG.6

$$Y_c = K_1 \text{sgn}(e) - \frac{K_2}{N^\alpha} \text{sgn}(v)$$

AS TARGET VALUE IS APPROACHED, PREDICTED NUMBER OF STEPS N DECREASES, INCREASING BRAKING FORCE

| STOP NEAR TARGET VALUE $(e \neq 0, v = 0)$ | OVERSHOOT $(ev < 0, N = 1)$ | STOP AT TARGET VALUE $(e = 0, v = 0)$ |
|---|---|---|

$$Y_c = 0$$

BRAKE IS RELEASED, AND CYLINDER STARTS MOVING TOWARD TARGET VALUE

MAXIMUM BRAKING IS APPLIED UNTIL VELOCITY BECOMES ZERO

$$Y_c = \begin{cases} K_1 & (e > 0, v = 0) \\ -K_1 & (e < 0, v = 0) \end{cases}$$

$$Y_c = \begin{cases} -K_1 - K_2 & (e < 0, v > 0) \\ K_1 + K_2 & (e > 0, v < 0) \end{cases}$$

# FIG.7

| | | POSITION | VELOCITY | GENERATED FORCE | TARGET GENERATED FORCE |
|---|---|---|---|---|---|
| $x_r$ | TARGET VALUE | [m] | [m/s] | [N] | [m] |
| $x$ | CURRENT VALUE | [m] | [m/s] | [N] | [m] |
| $e$ | ERROR | [m] | [m/s] | [N] | [m] |
| $v$ | VELOCITY | [m/s] | [m/s²] ※1 | [N/s] ※2 | [m/s] |
| $Y_C$ | COMPENSATION INPUT | [V] | | | [N] |
| $K_1, K_2$ | GAIN | [V] | | | [N] |
| $\Delta t$ | SAMPLING PERIOD | [s] | | | |
| $k$ | CURRENT TIME | | | | |
| $N$ | PREDICTED NUMBER OF STEPS | | | | |
| $\alpha$ | EXPONENT | | | | |
| $sgn$ | SIGN FUNCTION | | | | |

※1 ACCELERATION

※2 TIME VARIATION OF THE GENERATED FORCE

# FIG.8

TARGET VALUE

$+$ $-$

SIGN FUNCTION

$K_1$

$\times$ $\div$

DELAY OPERATION

$z^{-1}$

LOWER LIMIT SETTING

EXPONENTIATION

CONTROLLED VARIABLE

$-$ $+$

SIGN FUNCTION

$K_2$

$\div$ $\times$

$+$ $-$

OUTPUT

FIG.9

EP 4 730 054 A1

43

# FIG.10

(A)

(B)

# FIG.11

(A)

(B)

# FIG.12

(A)

(B)

# FIG.13

(A)

(B)

# FIG.14

# FIG.15

(A)

Pulley

Pneumatic cylinder

Load

(B)

# FIG.16

(A)

(B)

# FIG.17

# FIG.18

(A)

(B)

# FIG.19

# FIG.20

(A)

(B)

# FIG.21

# FIG.22

# FIG.23

# FIG.24

(A)

(B)

# FIG.25

## FIG.26

(A)

(B)

## INTERNATIONAL SEARCH REPORT

| | International application No. |
|---|---|
| | **PCT/JP2024/021787** |

**A. CLASSIFICATION OF SUBJECT MATTER**

*G05B 11/36*(2006.01)i; *F15B 11/06*(2006.01)i
FI:  G05B11/36 501Z; F15B11/06 H; F15B11/06 B; G05B11/36 H

According to International Patent Classification (IPC) or to both national classification and IPC

**B. FIELDS SEARCHED**

Minimum documentation searched (classification system followed by classification symbols)

G05B11/36; F15B11/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 3-249401 A (MATSUSHITA ELECTRIC INDUSTRIAL CO., LTD.) 07 November 1991 (1991-11-07) claim 3 | 1-28 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **22 July 2024** | **06 August 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/021787**

| Patent document cited in search report | | | Publication date (day/month/year) | Patent family member(s) | Publication date (day/month/year) |
|---|---|---|---|---|---|
| JP | 3-249401 | A | 07 November 1991 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEI-REN PAI** ; **MING-QIANG SHTH**. nanoaccuracy Position Control of a Pneumatic Cylinder Driven Table. *JSME International Journal*, 2003, vol. 46 (3), 1062-1067

- **KAIJI SATO** ; **YUSUKE SANO**. Practical and intuitive controller design method for precision positioning of a pneumatic cylinder actuator stage. *Precision Engineering*, 2014, vol. 38, 703-710